# EUROPEAN PATENT SPECIFICATION

(11) **EP 1 398 352 B1**
(45) Date of publication and mention of the grant of the patent: **02.12.2009**
(21) Application number: 02722929.3
(22) Date of filing: 02.05.2002
(51) Int. Cl.: C08L 101/00, C08L 27/18, C08L 33/06, C08F 2/44, C08J 3/12

(54) **MODIFIER FOR THERMOPLASTIC RESIN AND THERMOPLASTIC RESIN COMPOSITION CONTAINING THE SAME**
MODIFIKATOR FÜR THERMOPLASTISCHES HARZ UND DIESEN ENTHALTENDE THERMOPLASTISCHE HARZZUSAMMENSETZUNG
MODIFICATEUR DE RESINE THERMOPLASTIQUE ET COMPOSITION DE RESINE THERMOPLASTIQUE CONTENANT CE MODIFICATEUR

(30) Priority: 08.05.2001 JP 2001137209; 02.11.2001 JP 2001337924; 19.03.2002 JP 2002076124
(43) Date of publication of application: 17.03.2004
(73) Proprietor: MITSUBISHI RAYON CO., LTD., Tokyo 108-8506 (JP)
(72) Inventor: HONDA, Souichiro, Otake-shi, Hiroshima 739-0693 (JP); UENO, Naofumi, Otake-shi, Hiroshima 739-0693 (JP); SHIGEMITSU, Hideyuki, Otake-shi, Hiroshima 739-0693 (JP); OOSUKA, Masahiro, Otake-shi, Hiroshima 739-0693 (JP)
(74) Representative: ter Meer, Nicolaus
(86) International application number: PCT/JP2002/004399
(87) International publication number: WO 2002/090440

(56) References cited:
- EP-A- 0 393 480
- EP-A2- 0 822 226
- WO-A-99/10431
- JP-A- 3 119 048
- JP-A- 11 269 360
- JP-A- 11 279 340
- JP-A- 2000 290 445
- JP-A- 2000 290 461
- JP-A- 2000 297 190
- JP-A- 2000 327 807
- JP-A- 2001 316 531
- JP-A- 2002 129 042
- JP-A- 2002 138 210
- US-A- 5 164 426
- PATENT ABSTRACTS OF JAPAN vol. 2000, no. 02, 29 February 2000 (2000-02-29) & JP 11 323031 A (MITSUBISHI RAYON CO LTD), 26 November 1999 (1999-11-26)
- PATENT ABSTRACTS OF JAPAN vol. 2000, no. 11, 3 January 2001 (2001-01-03) & JP 2000 234035 A (MITSUBISHI RAYON CO LTD), 29 August 2000 (2000-08-29)

## Description

### TECHNICAL FIELD

The present invention relates to a modifier for thermoplastic resin, comprising polytetrafluoroethylene (A) and an alkyl (meth)acrylate-based polymer (B); and a thermoplastic resin composition comprising this modifier and a thermoplastic resin (C), further, if necessary, a flame retardant (D) and a filler (E) are compounded therein. ,

### BACKGROUND ART

Polytetrafluoroethylene, due to high crystallinity and low intermolecular force, has a nature of fiberization by a slight stress, and when compounded in a thermoplastic resin, shows improvements in molding processability, mechanical properties and the like. Because of this, polytetrafluoroethylene is conventionally utilized also as an additive to a thermoplastic resin. For example, JP-A No. 9-25420 discloses a method of using polytetrafluoroethylene capsulated by a styrene/acrylonitrile copolymer, for improving the melting speeds of various resins typically including a polyvinyl chloride resin.

When polytetrafluoroethylene is used in a flame-proofing resin composition, it is generally known that fiberization thereof in a resin performs an effect of suppressing fire spreading by dropping of flame drops in combustion. Particularly, there is recently an increased requirement for flame-proofing of resin materials, and regarding housing materials of OA instruments such as computers, printers and the like, and domestic electric appliances such as televisions, audio instruments and the like, there is a strong desire for flame-proofing to decrease combustion damages. Further, the decrease in weight, decrease in thickness and complication of form of instruments cause a requirement for higher flame retardancy of resin materials.

When polytetrafluoroethylene is used in a thermoplastic resin composition, it is known that fiberization thereof in a resin performs effects of enhancing the melt tension of a resin, preventing draw down in blow molding, preventing jetting in injection molding, decreasing specific gravity in foaming molding, improving appearance in extrusion molding, and promoting the dispersibility of a filler in a resin composition containing the filler.

However, polytetrafluoroethylene has poor compatibility with most of thermoplastic resins, and it is difficult to uniformly disperse polytetrafluoroethylene and an aggregate tends to be formed, only by adding polytetrafluoroethylene to a resin composition and simply blending this. The aggregate of polytetrafluoroethylene causes the poor appearance of a molded article, further, increases the addition amount necessary for manifestation of flame retardancy and tends to invite decrease in mechanical properties such as impact resistance and the like. Because of such a reason, there is a strong desire for a technology by which the uniform dispersion of polytetrafluoroethylene in a thermoplastic resin composition can be conducted easily, and flame retardancy can be improved by adding a small amount of it.

There are conventionally trials in which by using a mixture of polytetrafluoroethylene with an organic polymer, polytetrafluoroethylene is dispersed successfully and the flame retardancy of a thermoplastic resin composition is improved. For example, Japanese Patent Application Publication (JP-B) No. 5-8749 describes that flame retardancy is improved if a powder obtained by mixing a polytetrafluoroethylene dispersion and an aromatic vinyl-based polymer dispersion and co-coagulating the mixture is used and this powder is added. However, in the case of co-coagulation with a polytetrafluoroethylene dispersion using an aromatic vinyl-based polymer dispersion, when temperature in co-coagulation is too low, coating of polytetrafluoroethylene with an aromatic vinyl-based polymer becomes difficult, a mixture of fine particles of an aromatic vinyl-based polymer single body with a self adhered substance of mutual polytetrafluoroethylenes is formed, and the resulted powder mixture shows poor handling and flowability, and dispersibility in the thermoplastic resin of the powders becomes insufficient. By this, there is a possibility of occurrence of variation in property of manifesting prevention of dropping of flame drips in combustion and there occurs also a possibility of decrease in the surface appearance of a molded article due to poor dispersibility.

Thus, in the case of obtaining a powder by mixing a polytetrafluoroethylene dispersion and an aromatic vinyl-based polymer dispersion and co-coagulating the mixture, temperature in co-coagulation should be as near the boiling point of water as possible, therefore, working safety and productivity are not practical.

Further, Japanese Patent Application Laid-Open (JP-A) No. 9-95583 describes that a powder obtained by polymerizing an organic monomer in the presence of a polytetrafluoroethylene dispersion is excellent in handling. However, the particle size of an organic polymer obtained by polymerization in the presence of a polytetrafluoroethylene dispersion is not described here. Actually, with the technology described specifically here, a tendency is manifested in which when the content of polytetrafluoroethylene is higher, the resulted powder gets larger particle size, and the flowability of the powder decreases. Namely, this powder shows a tendency of decrease in handling with increase in the content of polytetrafluoroethylene. When such a powder is mixed with a thermoplastic resin, there is a possibility that poor dispersion in a thermoplastic resin composition is caused, exerting a reverse influence on the surface appearance of a molded article. In completion of polymerization of an acrylonitrile-styrene-based polymer, disposal of remaining acrylonitrile monomer and styrene monomer needs enormous cost, and in burning thereof, there occurs also a possibility of generation of a toxic hydrogen cyanide gas from the acrylonitrile-styrene-based polymer.

Japanese Patent No. 2942888 describes a method of obtaining a powder showing excellent dispersibility of polytetrafluoroethylene, by polymerizing a vinyl-based monomer in a dispersion obtained by mixing an organic polymer particle dispersion composed of an alkyl (meth)acrylate having 5 to 30 carbon atoms with a polytetrafluoroethylene particle dispersion. However, in this method, an alkyl (meth)acrylate-based polymer obtained from an alkyl (meth)acrylate having 5 to 30 carbon atoms is used for the purpose of improving the dispersibility of polytetrafluoroethylene in a polyolefin resin, and use in resins other than polyolefin resins, particularly use in engineering plastics is not considered. Also in dispersibility thereof and storage stability for a long period of time of a powder, there is the room of improvement.

JP-A No. 2000-63652 describes that an alkyl (meth)acrylate-based polymer and polytetrafluoroethylene show improvements in the draw down resistance and flame retardancy of a thermoplastic resin composition. However, in this method, individual powders of an alkyl (meth)acrylate-based polymer and polytetrafluoroethylene are mixed with a thermoplastic resin, before melting and kneading thereof, and there is a possibility that dispersion of polytetrafluoroethylene becomes poor and no good appearance of a molded article is invited.

### DISCLOSURE OF THE INVENTION

The present invention has been investigated for solving the problems of the above-mentioned conventional technologies, and the object thereof is to provide a modifier for thermoplastic resin which provides, in adding to a thermoplastic resin, high dispersibility of polytetrafluoroethylene and can improve various physical properties such as excellent mechanical properties and flame retardancy by addition thereof in small amount, and a thermoplastic resin composition obtained by using this.

The present inventors have intensively studied to attain the above-mentioned object, and resultantly found that a polytetrafluoroethylene-containing modifier obtained by using an alkyl (meth)acrylate-based polymer containing 70% by weight or more of a constituent unit composed of an alkyl (meth)acrylate carrying an alkyl group having 1 to 4 carbon atoms performs a very excellent effect, leading to completion of the invention.

Namely, the present invention relates to a modifier for thermoplastic resin, comprising polytetrafluoroethylene (A), and an alkyl (meth)acrylate-based polymer (B) containing 70% by weight or more of a constituent unit composed of an alkyl (meth)acrylate carrying an alkyl group having 1 to 4 carbon atoms.

Further, the present invention relates to a thermoplastic resin composition obtained by adding the above-mentioned modifier to a thermoplastic resin (C) so that the content of the polytetrafluoroethylene (A) is 0.001 to 20 parts by weight based on 100 parts by weight of the thermoplastic resin (C); and a thermoplastic resin composition comprising the above-mentioned modifier, thermoplastic resin (C) and a flame retardant (D), or the above-mentioned modifier, thermoplastic resin (C) and a filler (E).

In the present invention, "(meth)acryl" means acryl and/or methacryl.

### BEST MODES FOR CARRYING OUT THE INVENTION

The polytetrafluoroethylene (A) used in the modifier of the present invention is obtained by polymerizing monomers containing tetrafluoroethylene as the main component. The polytetrafluoroethylene may be copolymerized with other monomer in an amount not deteriorating the desired properties. As the copolymerization component, for example, fluorine-containing olefins such as hexafluoropropylene, chlorotrifluoroethylene, fluoroalkylethylene, and perfluoroalkyl vinyl ether ; fluorine-containing alkyl (meth)acrylates such as perf luoroalkyl (meth)acrylate are listed. The amount of the copolymerization components is preferably 10% by weight or less in 100% by weight of the total amount of tetrafluoroethylene and copolymerization components.

The polytetrafluoroethylene (A) is preferably not an aggregate but a particle having an average particle size of 10 µm or less.

The alkyl (meth)acrylate-based polymer (B) used in the modifier of the present invention is a polymer containing 70% by weight or more of a constituent unit composed of an alkyl (meth)acrylate carrying an alkyl group having 1 to 4 carbon atoms. The alkyl (meth)acrylate carrying an alkyl group having 1 to 4 carbon atoms can be polymerized by radical polymerization, and ion polymerization. In the present invention, since the alkyl (meth)acrylate carrying an alkyl group having 1 to 4 carbon atoms is used, the dispersibility of polytetrafluoroethylene in various thermoplastic resins and thermoplastic elastomers is more excellent as compared with conventional polytetrafluoroethylene-containing modifiers. Further, the alkyl (meth)acrylate-based polymer manifests no possibility of generation of a toxic gas in combustion, additionally, shows a significantly smaller amount of monomers remaining in completion of polymerization, and provides low load on environments, as compared with conventional acrylonitrile-styrene-based polymers.

Specific examples of the alkyl (meth)acrylate carrying an alkyl group having 1 to 4 carbon atoms include methyl (meth)acrylate, ethyl (meth)acrylate, and butyl (meth)acrylate. The alkyl group may be linear or branched. These can be used alone or in combination of two or more. Particularly, polymers containing a constituent unit composed of methyl methacrylate in an amount of 50% by weight or more, more preferably 70% by weight or more are preferable since a powder excellent in handling and storage stability is obtained.

In preparing the alkyl (meth)acrylate-based polymer (B), other monomers copolymerizable with the alkyl (meth)acrylate carrying an alkyl group having 1 to 4 carbon atoms can be used in an amount of 30% by weight or less. Examples of other monomers include vinyl ether-based monomers such as vinyl methyl ether, and vinyl ethyl ether ; vinyl carboxylate-based monomers such as vinyl acetate, and vinyl butyrate ; olefin-based monomers such as ethylene, propylene and isobutylene ; diene-based monomers such as butadiene, isoprene, dimethylbutadiene and the like; and other monomers.

In the present invention, the alkyl (meth)acrylate-based polymer (B) contains an alkyl methacrylate carrying an alkyl group having 1 to 4 carbon atoms and an alkyl acrylate carrying an alkyl group having 1 to 4 carbon atoms in a total amount thereof of 70% by weight or more. When an alkyl methacrylate is singly used, Tg is higher, a fine powder is generated in large amount in recovering a powder, and powder handling tends to lower, while when an alkyl acrylate is contained, Tg lowers, and powder property is improved. It is preferable that the content of the alkyl methacrylate is 50 to 90% by weight and the content of the alkyl acrylate is 10 to 50% by weight, and powder property is best with such a composition.

The weigh-average molecular weight (Mw) of the alkyl (meth)acrylate-based polymer (B) is preferably from 20,000 to 4,000,000, more preferably from 20,000 to 100,000. When Mw is 100,000 or less, there is a tendency that flowability is not deteriorated in adding a modifier to a thermoplastic resin. Particularly from the standpoint of physical property balance, Mw is further preferably from 20,000 to 50,000. This Mw is a value measured by gel permeation chromatography.

The modifier of the present invention comprises the above-mentioned polytetrafluoroethylene (A) and alkyl (meth)acrylate-based polymer (B) as the main component. Regarding the ratio thereof, the proportion of the polytetrafluoroethylene (A) is from 40 to 70 parts by weight based on 100 parts by weight of the total amount of them. When this content is 40% by weight or more, the addition efficiency of the modifier is improved, and when 70% by weight or less, there occurs a tendency that dispersibility and processability are not deteriorated.

For example the modifier of the present invention is obtained by a method [first production method] in which monomers containing 70% by weight or more of an alkyl (meth)acrylate carrying an alkyl group having 1 to 4 carbon atoms are polymerized in a dispersion wherein the polytetrafluoroethylene (A) particles having an average particle size of 0.05 to 1.0 µm are dispersed, to form an alkyl (meth)acrylate-based polymer (B), then, solid components in the resulted dispersion are coagulated or spray-dried.

For further example, the modifier of the present invention is obtained by a method [second production method] in which a dispersion wherein the polytetrafluoroethylene (A) particles having an average particle size of 0.05 to 1.0 µm are dispersed is mixed with a dispersion wherein the alkyl (meth)acrylate-based polymer (B) particles containing 70% by weight or more of a constituent unit composed of an alkyl (meth)acrylate carrying an alkyl group having 1 to 4 carbon atoms are dispersed, then, solid components in the mixed dispersion are coagulated or spray-dried.

- Coagulation of solid components in the dispersion according to the first production method and the second production method can be conducted, for example, by putting them into hot water containing a dissolved metal salt such as calcium chloride, and magnesium sulfate and salting them out. Spray drying can be conducted, for example, by spraying the aqueous solution itself.

When monomers containing 70% by weight or more of an alkyl (meth)acrylate carrying an alkyl group having 1 to 4 carbon atoms are polymerized in a dispersion wherein the polytetrafluoroethylene (A) particles are dispersed, to form the alkyl (meth)acrylate-based polymer (B), then, solid components in the dispersion are coagulated or spray-dried, to obtain the modifier of the present invention, or when monomers containing 70% by weight or more of an alkyl (meth)acrylate carrying an alkyl group having 1 to 4 carbon atoms are polymerized to obtain a dispersion of alkyl (meth)acrylate-based polymer (B) particles, then, this dispersion is mixed with a dispersion wherein the polytetrafluoroethylene (A) particles are dispersed, and solid components in the resulted dispersion are coagulated or spray-dried, to obtain the modifier of the present invention, it is preferable to conduct polymerization so that the average particle size of the alkyl (meth)acrylate-based polymer (B) is 0.05 to 0.15 µm (more preferably 0.05 to 0.1 µ m). In the alkyl (meth)acrylate-based polymer (B), when the content of an alkyl (meth)acrylate carrying an alkyl group having 1 to 4 carbon atoms is 70% by weight or less, particularly when the content of methyl methacrylate is 70% by weight or less, handling and storage stability for a long period of time of the resulting powder lower, undesirably.

The dispersion of polytetrafluoroethylene (A) particles can be obtained by emulsion-polymerizing monomers containing tetrafluoroethylene as the main component. Further, as the commercially available product (trade name) of the aqueous dispersion of polytetrafluoroethylene (A) particles, Fluone AD-1, AD-936 manufactured by Asahi Fluoro Polymers K.K.; Polyfrone D-1, D-2 manufactured by Daikin Industries, Ltd.; and Teflon 30J manufactured by Mitsui Dupont Fluoro Chemical K.K., are listed.

The dispersion of alkyl (meth)acrylate-based polymer (B) particles containing 70% by weight or more of a constituent unit composed of an alkyl (meth)acrylate carrying an alkyl group having 1 to 4 carbon atoms is obtained by emulsion polymerization, and mini emulsion polymerization of monomers containing 70% by weight or more of an alkyl (meth)acrylate carrying an alkyl group having 1 to 4 carbon atoms. The emulsifier which can be used in these polymerizations is not particularly restricted, and conventionally known various emulsifiers can be used. For example, anionic surfactants such as fatty acid salts, alkyl sulfate salts, alkylbenzenesulfonate salts, alkylphosphate salts, and dialkylsulfosuccinate salts ; nonionic surfactants such as polyoxyethylene alkyl ether, polyoxyethylene fatty esters, sorbitan fatty esters, and glycerin fatty esters ; cationic surfactants such as alkylamine salts, can be used. These emulsifiers can be used alone or in combination.

When pH of the polymerization system shift to the alkaline side depending on the kind of the emulsifier used, a suitable pH controlling agent can be used for preventing hydrolysis of an alkyl (meth)acrylate. Examples of the pH controlling agent include boric acid-potassium chloride-potassium hydroxide, potassium dihydrogen phosphate-disodium hydrogen phosphate, boric acid-potassium chloride-potassium carbonate, citric acid-potassium hydrogen citrate, potassium dihydrogen phosphate-boric acid, and disodium hydrogen phosphate-citric acid are listed.

As the polymerization initiator used in polymerization of an alkyl (meth)acrylate, for example, single component systems of water-soluble initiators or oil-soluble initiators, or initiators of redox system, are listed. As the specific examples of the water-soluble initiators, inorganic initiators such as a persulfate are listed. As the specific examples of the oil-soluble initiators, organic peroxides such as t-butyl hydroperoxide, cumene hydroperoxide, benzoyl peroxide, and lauroyl peroxide ; azo compounds, are listed. Specific examples of the redox type initiators include, but not limited to, initiators obtained by combining the above-mentioned inorganic initiators with a sulfite, hydrogensulfite, and thiosulfite, initiators obtained by combining the above-mentioned organic peroxides and azo compounds with sodium formaldehyde sulfoxylate.

One of the thermoplastic resin compositions of the present invention is that obtained by adding the modifier of the present invention so that the content of the polytetrafluoroethylene (A) is from 0.001 to 20 parts by weight based on 100 parts by weight of the thermoplastic resin (C). When the modifier of the present invention is used in an amount within this range, a polytetrafluoroethylene component is uniformly dispersed in the thermoplastic resin (C), giving excellent mechanical property and flame retardancy.

As thermoplastic resin (C), conventionally known various thermoplastic resins are listed. The term " thermoplastic resin" referred to in the present invention is intended to include also thermoplastic elastomers. Specific examples thereof include engineering plastics such as styrene-based resins (St-based resins) such as polystyrene (PS), high impact polystyrene (HIPS), (meth)acrylate·styrene copolymer (MS), acrylonitrile·styrene copolymer (SAN), styrene·maleic anhydride copolymer (SMA), ABS, ASA, and AES, acrylic resins (Ac-based resins) such as polymethyl methacrylate (PMMA), polycarbonate-based resins (PC-based resins), polyamide-based resins (PA-based resins), polyester-based resins (PEs-based resins) such as polyethylene terephthalate (PET), and polybutylene terephthalate (PBT), (modified) polyphenylene ether-based resins (PPE-based resins), polyoxymethylene-based resins (POM-based resins); polysulfone-based resins (PSO-based resins), polyarylate-based resins (PAr-based resins), polyphenylene sulfide-based resins (PPS-based resins), and thermoplastic polyurethane-based resins (PU-based resins) ; polymer alloys such as PC-based resin/St-based resin alloys such as PC/ABS resins, PA-based resin/St-based resin alloys such as PA/ABS resins, PA-based resin/polyolefin-based resin alloys such as PA/PP, PC-based resin/PEs-based resin alloys such as PC/PBT, alloys of mutual polyolefin-based resins such as PP/PE, PPE-based resin alloys such as PPE/HIPS, PPE/PBT, and PPE/PA ; polyolefin-based resins such as poly-α-olefins such as polyethylene, (ultra) low density polyethylene, polypropylene, polybutene, and poly-4-methylpentene, copolymers of mutual α-olefins such as ethylene propylene rubber, ethylene butene copolymer, and ethylene butene terpolymer, copolymers of α-olefins with various monomers such as an ethylene vinyl acetate copolymer, ethylene/ethyl acrylate copolymer, ethylene methyl methacrylate copolymer, ethylene/maleic anhydride copolymer, ethylene/acrylic acid copolymer, and ethylene/glycidyl methacrylate copolymer ; and thermoplastic elastomers such as polylactic acid, polycaprolactone, aliphatic polyester resins essentially consisting of an aliphatic glycol and an aliphatic dicarboxylic acid or derivative thereof, bio-degradable cellulose esters, polypeptides, polyvinyl alcohol, starch, carageenan, chitin·chitosan, bio-degradable resins such as natural linear polyester-based resins, styrene-based elastomers, urethane-based elastomers, polyester-based elastomers, polyamide-based elastomers, fluorine-based elastomers, 1,2-polybutadiene, trans-1,4-polyisoprene, and acrylic elastomers. However, the thermoplastic resin (C) is not limited to these examples, and general thermoplastic resins other than these examples can be used. These may be used alone or in combination of two or more.

To the thermoplastic resin composition of the present invention, various additives such as a flame retardant, plasticizer, stabilizer, filler, impact resistance improving agent, lubricant, processing aid, foaming agent, pigment, de-fogging agent, anti-bacterial agent, antistatic agent, conductivity imparting agent, surfactant, crystal nucleating agent, and heat resistance improving agent can be added depending on the object, providing the properties of the composition are not deteriorated.

Examples of the flame retardant (D) include phosphates such as tricresyl phosphate, triallyl phosphate, triphenyl phosphate, cresyl diphenyl phosphate, tri(chloroethyl) phosphate, tris(dichloropropyl) phosphate, and tris(2,3-dibromopropyl) phosphate ; condensed phosphates such as phenylenebis(phenylglycidyl phosphate) ; phosphorus-based compounds such as red phosphorus, and polyammonium phosphate/pentaerythritol complex system ; polyols such as phosphate-type polyols, halogen-containing polyols, and phosphorus-containing polyols ; aromatic halogen compounds such as hexabromobenzene, and decabromodiphenyl oxide ; halogenated epoxy resins such as brominated bisphenol-based epoxy resins ; halogenated polycarbonate resins; brominated polystyrene resins; brominated bisphenol cyanurate resins; brominated polyphenylene oxides; decabromodiphenyl oxide bisphenol condensate; metal hydroxides such as aluminum hydroxide, magnesium hydroxide, calcium hydroxide, calcium aluminate, and hydrotalcite ; antimony compounds such as antimony trioxide, and antimony pentoxide ; triazine compounds such as melamine, cyanuric acid, and melamine cyanurate ; additionally, kaolin clay, dorsonite, calcium carbonate zinc borate, molybdenum compounds, ferrocene, tin compounds, and inorganic complex salts. Particularly, phosphates containing no halogen such as tricresyl phosphate, triallyl phosphate, triphenyl phosphate, and cresyl diphenyl phosphate and condensed phosphates such as phenylenebis(phenylglydicyl phosphate), are preferably used.

As the filler (E), metal powders, oxides, hydroxides, silic acid or silicates, carbonates, silicon carbonate, vegetable fiber, animal fiber, and synthetic fiber are listed. Specific typical examples thereof include an aluminum powder, copper powder, iron powder, alumina, natural woods, paper, calcium carbonate, talc, magnesium carbonate, mice, kaolin, calcium sulfate, barium sulfate, aluminum hydroxide, magnesium hydroxide, silica, clay, zeolite, talc, wollastonite, acetate powder, silk powder, aramide fiber, glass fiber, carbon fiber, metal fiber, carbon black, graphite, glass beads, and reproduced filler materials.

As the reproduced filler material used in the filler (E), agricultural wastes such as hull, bran, rice polishings, corn waste, potato shell, de-fatted soy bean, walnut shell, coconut shell, and bagasse ; brewing lees such as distillation lees of distilled alcohol such as shochu, beer malt lees, wine grape lees, sake-cake, and soy bean lees ; various sediments such as tea sediment, coffee sediment, and citrus squeezed sediment ; food processing wastes such as okara (bean curd waste), and chlorella ; fishery wastes such as shells such as oyster shell and mail of shrimp and crab ; wood wastes such as sawdust, scrapped wood (haiho-daki), bark, cut bamboo, waste wood generated by wood cutting in a lumber mill, and demolition of wood houses ; wastes such as waste pulp, and paper piece generating in paper regeneration and paper making businesses, are listed. These can be used alone or in admixture of two or more.

The form and size of the filler (E) are not particularly restricted, and in the case of particular shape, when particle size is larger, and in the case of fiber shape, when fiber is too long, the dispersibility of the filler (E) lowers and the product appearance deteriorates, therefore, ground fillers are preferably used, and those are preferably 10 mesh pass or smaller, more preferably 100 mesh pass or smaller. From the standpoint of handling of a ground article, those are preferably 10000 mesh pass or larger.

Though the water content of the filler (E) is not particularly restricted, since the filler (E) often contains water in large proportion, it is preferable to dry the filler (E) by an oven or heat stirring treatment until the water content reaches 20% by weight or less due to handling as a powder. Further, even if the water content is 20% by weight or less, when abnormal foaming and the like occur on a molded article, it is preferable to further dry the filler by an oven or heat stirring treatment, and it is particularly preferable to dry the filler until the water content reaches 1% by weight or less.

For improving dispersibility into the thermoplastic resin (C), it is possible to use fillers previously surface-treated with fine particles of polybasic acid anhydrides such as maleic anhydride, organic peroxide such as dicumyl peroxide, polyolefins modified with an acid, polyester-based waxes, fatty acid metal salts such as zinc stearate. metal oxides such as titanium oxide, and calcium oxide.

The fillers (E) can be used alone or in admixture of two or more. The compounding amount of the filler (E) is preferably from 0 to 2000 parts by weight based on 100 parts by weight of the thermoplastic resin (C). It is preferable from the standpoint of appearance that this compounding amount is 2000 parts by weight or less.

As the typical examples of the foaming agent (F), inorganic foaming agents, volatile foaming agents, and decomposing type foaming agents are listed. As the inorganic foaming agent, for example, carbon dioxide, air, and nitrogen are listed. Examples of the volatile foaming agent include aliphatic hydrocarbons such as propane, n-butane, isobutene, pentane, and hexane, halogenated hydrocarbons such as trichlorofluoromethane, dichlorofluoromethane, dichlorotetrafluoroethane, methyl chloride, ethyl chloride, and methylene chloride. As the decomposing type foaming agent, for example, azodicarbonamide, dinitrosopentamethylenetetramine, azobisisobutyronitrile, and sodium bicarbonate are listed. These foaming agents may be appropriately used in admixture.

When the foaming agent (F) is used, it may also be permissible to further add a bubble controlling agent into a melt kneaded substance of a thermoplastic resin composition. As the bubble controlling agent, for example, inorganic powders such as talc, and silica, reaction mixtures of an acidic salt of a poly-valent carboxylic acid, a poly-valent carboxylic acid and sodium carbonate or sodium bicarbonate, and citric acid are listed.

Examples of the plasticizer include phthalate-based plasticizers such as dimethyl phthalate, diethyl phthalate, dibutyl phthalate, dihexyl phthalate, di-n-octyl phthalate, 2-ethylhexyl phthalate, diisooctyl phthalate, dicapryl phthalate, dinonyl phthalate, diisononyl phthalate, didecyl phthalate, diisodecyl phthalate, diundecyl phthalate, dilauryl phthalate, ditridecyl phthalate, dibenzyl phthalate, dicyclohexyl phthalate, butylbenzyl phthalate, octyldecyl phthalate, butyloctyl phthalate, octylbenzyl phthalate, n-hexyl-n-decyl phthalate, and n-octyl-n-decyl phthalate ; phosphate-based plasticizers such as tricresyl phosphate, tri-2-ethylhexyl phosphate, triphenyl phosphate, 2-ethylhexyl diphenyl phosphate, and cresyl diphenyl phosphate ; adipate-based plasticizers such as di-2-ethylhexyl adipate, diisodecyl adipate, n-octyl-n-decyl adipate, n-heptyl-n-nonyl adipate, diisooctyl adipate, diiso-n-octyl adipate, di-n-octyl adipate, and didecyl adipate ; sebacate-based plasticizers such as dibutyl sebacate, di-2-ethylhexyl sebacate, diisooctyl sebacate, and butylbenzyl sebacate ; azelate-based plasticizers such as di-2-ethylhexyl azelate, dihexyl azelate, and diosooctyl azelate; citrate-based plasticizers such as triethyl citrate, triethyl acetylcitrate, tributyl citrate, tributyl acetylcitrate, and tri-2-ethylhexyl acetylcitrate ; glycolate-based plasticizers such as methylphthalylethyl glycolate, ethylphthalylethyl glycolate, and butylphthalylbutyl glycolate ; trimellitate-based plasticizers such as tributyl trimellitate, tri-n-hexyl trimellitate, tri-2-exylhexyl trimellitate, tri-n-octyl trimellitate, tri-isooctyl trimellitate, and tri-isodecyl trimellitate ; phthalic acid isomer ester-based plasticizers such as di-2-ethylhexyl isophthalate, and di-2-ethylhexyl terephthalate ; ricinolate-based plasticizers such as methylacetyl ricinolate, and butylacetyl ricinolate ; polyester-based plasticizers such as poly-propylene adipate, polypropylene sabacate, and modified polyesters thereof, ; epoxy-based plasticizers such as epoxidized soy bean oil, epoxybutyl stearate, epoxy(2-ethylhexyl) stearate, and epoxidized linseed oil. These can be used alone or in combination of two or more.

Examples of the stabilizer include lead-based stabilizers such as tri-basic lead sulfate, dibasic lead phosphite, basic lead sulfite, and lead silicate ; metal soap-based stabilizers derived from metals such as potassium, magnesium, barium, zinc, cadmium, and lead and fatty acids such as 2-ethylhexanoic acid, lauric acid, myristic acid, palmitic acid, stearic acid, isostearic acid, hydroxystearic acid, oleic acid, ricinoleic acid, and behenic acid ; organic tin-based stabilizers derived from an alkyl group, ester group, and fatty acid salt, maleate, sulfur-containing compound; complex metal soap-based stabilizers such as Ba-Zn-based, Ca-Zn-based, Ba-Ca-based, Ca-Mg-Sn-based, Ca-Zn-Sn-based, Pb-Sn-based, and Pb-Ba-Ca-based stabilizers ; metal salt-based stabilizers derived from metals such as barium, and zinc , and usually two or more organic acids such as branched fatty acids such as 2-ethylhexanoic acid, iso-decanoic acid, and trialkylacetic acid , unsaturated fatty acids such as oleic acid, ricinoleic acid, and linoleic acid, alicyclic acids such as naphthenic acid, aromatic acids such as phenol, benzoic acid, salicylic acid, and substituted derivatives thereof; metal-based stabilizers such as metal salt liquid stabilizers obtained by dissolving the above-mentioned stabilizers in an organic solvent such as petroleum-based hydrocarbons, alcohols, and glycerin-derivatives, and further compounding a stabilizing aid such as phosphites, epoxy compounds, coloration preventing agents, transparency improving agents, light stabilizers, antioxidants, and lubricants ; and non-metal-based stabilizers such as epoxy compounds such as epoxy resins, epoxidized soy bean oil, epoxidized vegetable oil, and epoxidized fatty alkyl esters , organic phosphites in which phosphorus is substituted by an alkyl group, aryl group, cycloalkyl group, and alkoxyl group and which has a dihydric alcohol such as propylene glycol, an aromatic compound such as hydroquinone, and bisphenol A , hindered phenols such as bisphenol dimerized via BHT, sulfur, and methylene group , ultraviolet absorbers such as salicylates, benzophenone, and benzotriazole , light stabilizers such as hindered amine or nickel complex salt, ultraviolet shielding agents such as carbon black, and rutile type titanium oxide, poly-hydric alcohols such as trimethylolpropane, pentaerythritol, sorbitol, and mannitol , nitrogen-containing compounds such as β-aminocrotonate, 2-phenylindole, diphenylthiourea, and di-cyanediamide, sulfur-containing compounds such as dialkylthiodipropionates, keto compounds such as acetoacetates, dehydro acetic acid, and β-diketone, organic silicon compounds, and borates. These can be used alone or in combination of two or more.

Examples of the impact resistance improving agent include polybutadiene, polyisoprene, polychloroprene, fluorine rubber, styrene-butadiene-based copolymer rubber, methyl methacrylate-butadiene-styrene-based copolymer, methyl methacrylate-butadiene-styrene-based graft copolymer, acrylonitrile-styrene-butadiene-based copolymer rubber, acrylonitrile-styrene-butadiene-based graft copolymer, styrene-butadiene-styrene block copolymer rubber, styrene-isoprene-styrene copolymer rubber, styrene-ethylene-butylene-styrene copolymer rubber, ethylene-propylene copolymer rubber, ethylene-propylene-diene copolymer rubber (EPDM), silicone-containing acrylic rubber, silicone/acryl complex rubber-based graft copolymer, and silicone-based rubber. As the diene in ethylene-propylene-diene copolymer rubber (EPDM), 1,4-hexanediene, dicyclopentadiene, methylenenorbornene, ethlidenenorbornene, and propenylnorbornene are listed. These impact resistance improving agents can be used alone or in combination of two or more.

Examples of the lubricant include pure hydrocarbon-based lubricants such as liquid paraffin, natural paraffin, micro wax, synthetic paraffin, and lower molecular weight polyethylene ; halogenated hydrocarbon-based lubricants; aliphatic lubricants such as higher fatty acids, and oxy fatty acids ; fatty amide-based lubricants such as fatty amides, and bisfatty amides ; ester-based lubricants such as lower alcohol esters of fatty acids, poly-hydric alcohol esters of fatty acids such as glyceride, polyglycol esters of fatty acids, and fatty alcohol esters of fatty acids (ester waxes) ; and lubricants composed of metal soaps, fatty alcohols, polyvalent alcohols, polyglycols, polyglycerols, partial esters of fatty acids and poly-hydric alcohols, partial esters of fatty acids, polyglycols and polyglycerols.

Examples of the processing aid include (meth)acrylate-based copolymers, (meth)acrylate-styrene copolymers, (meth)acrylate-styrene-α-methylstyrene copolymers, acrylonitrile-styrene copolymers, acrylonitrile-styrene-(meth)acrylate copolymers, acrylonitrile-styrene-α-styrene copolymers, and acrylonitrile-styrene-maleimide copolymers .

Compounding of the modifier of the present invention into the thermoplastic resin (C) can be conducted, for example, by melt kneading by conventionally known methods such as extrusion kneading, and roll kneading . Further possible is multi-stage mixing in which the modifier of the present invention and a part of the thermoplastic resin (C) are mixed first to provide a master batch, and the remaining part of the thermoplastic resin (C) is further added to and mixed with this.

As the method of molding a thermoplastic resin composition containing the modifier of the present invention added, for example, calender molding, heat molding, extrusion blow molding, foaming molding, extrusion molding, injection molding, and melt spinning are listed.

As the useful molded articles obtained by using a thermoplastic resin composition containing the modifier of the present invention added, for example, molded articles in the form of sheet, film or hetero shape obtained by extrusion molding; hollow molded bodies, injection molded bodies and the like obtained by blow molding and injection molding. Specific examples thereof include bumpers, spoilers, side moles of automobiles, ceilings, interiors, housings of OA instruments, construction materials such as window frames, shelf plates, floor materials, and wall materials .

The present invention will be illustrated further in detail by the following examples below, but the scope of the present invention is not limited to them. In the descriptions, parts and % are all by weight. Measurements of physical properties were carried out by the following methods.

### (1) Solid component concentration:

It was determined by drying a particle dispersion at 180°C for 30 minutes.

### (2) Particle size measurement:

A dispersion of modifier particles was diluted with distilled water and used as a sample, and the particle size thereof was measured using CHDF 2000 type grain size distribution meter manufactured by MATEC, US. The measurement was conducted according to the standard conditions recommended by MATEC. Namely, an exclusive capillary type cartridge for particle separation and approximately neutral carrier liquid were used, and 0.1 ml of a diluted latex sample having a concentration of about 3% was used for measurement, at a flow rate of 1.4 ml/min, a pressure of about 4000 psi (2600 KPa) and a temperature of 35°C. As the standard particle size substances, twelve mono-dispersed polystyrene particles in total, having known particle sizes within the range from 0.02 µm to 0.8 µm, manufactured by DUKE, US were used.

### (3) Weigh-average molecular weight measurement:

Measurement was conducted using a column (K-806L, manufactured by Showa Denko K.K.) in gel permeation chromatography (LC-10A system, manufactured by Shimadzu Corp.)

### (4) Measurement of flowability of powder:

It was measured using a bulk specific gravity meter (manufactured by Tsutsui Rikagaku Kikai K.K.) according to JIS K6721. In this measurement, a powder was filled in a funnel of the bulk specific gravity meter, then, the powder was flowed for 10 seconds from the funnel, and the powder flown was weighed, and used as an index of flowability of the powder (g/10 sec).

Larger amount of the powder flow during 10 seconds means excellent flowability of the powder. In actual working, a powder showing excellent flowability means excellent handling, too.

### (5) Measurement of storage stability of powder

20 g of a powder was filled in an acrylic resin vessel, which was placed in a gear oven (GHPS-222, manufactured by Tabai K.K.) having a temperature controlled in the oven of 50°C and left for 6 hours while placing a weight of 5 kg on the vessel, then, removed and cooled to room temperature, to produce a block of the powder. This powder was placed on a sieve having an opening of 12 mesh, and crushed by a vibration sieving machine (micro form magnetic vibration sieving machine M-2, manufactured by Tsutsui Rikagaku Kikai K.K.), and time when the crushed amount reached 60% was used measured and used to indicate the storage stability of the powder.

When the time when this crushed amount reaches 60% is shorter, the powder is not easily solidified during actual storage of the powder, and even if solidified, the block of the powder can be easily broken.

### (6) Combustibility test:

Vertical combustibility test was carried out according to UL 94 standard. A specimen having a thickness of 1.6 mm was used.

### (7) Izod impact strength test:

It was measured using a notched specimen having a thickness of 3.2 mm at 23°C according to ASTM D256.

### (8) Tensile test:

The tensile strength and tensile elongation were measured according to ASTM D638.

### (9) Surface appearance:

The surface appearance of a specimen injection-molded was visually observed and judged according to the following standards.
○: Neither fish eye nor steak is observed on the surface.
×: Fish eye and steak are observed on the surface.

However, only in evaluations shown in Table 2, presence or absence of an aggregate in specimen was visually observed in addition to the surface appearance.
○: No fish eye is observed on the surface and no aggregate is observed in a specimen.
×: Fish eye is observed on the surface and aggregate is observed in a specimen.

### <Production Example 1: modifier for thermoplastic resin (A-1)>

To 83.3 parts of a polytetrafluoroethylene particle dispersion (manufactured by Asahi Fluoro Polymers K.K., Fluone AD936, solid concentration: 63.0%, containing a polyoxyethylene alkyl phenyl ether in a proportion of 5% based on polytetrafluoroethylene) was added 116.7 parts of distilled water, to obtain a polytetrafluoroethylene particle dispersion (A-1-1) having a solid content of 26,2%. This dispersion (A-1-1) contains 25% of polytetrafluoroethylene particles and 1.2% of a polyoxyethylene alkyl phenyl ether.

165 parts of distilled water and 2.0 parts of dipotassium alkenylsuccinate were charged into a reaction vessel equipped with a stirrer, condenser, thermocouple and nitrogen introduction port, then, 80 parts of the polytetrafluoroethylene dispersion (A-1-1) (20 parts by weight of polytetrafluoroethylene) was charged into the reaction vessel using a rotary pump (manufactured by Johnson Pump, IC30S-D), then, the atmosphere in the reaction vessel was purged with nitrogen by passing a nitrogen flow through the vessel. Then, the temperature in the system was raised to 55°C, and when the liquid temperature inside reached 55°C, a mixture composed of 0.1 part of potassium persulfate and 5 parts of distilled water was added, further, to this was dropped 64 parts of methyl methacrylate and 16 parts of n-butyl methacrylate over 90 minutes, and these were polymerized. After completion of dropping, the reaction mixture was kept for about 45 minutes, to complete the polymerization. Throughout a series of operations, no separation of solid was observed, and a uniform particle dispersion was obtained.

On the other hand, 150 parts of an aqueous solution dissolving calcium acetate in a proportion of 7% was heated at 70°C and stirred. Into this aqueous solution was gradually dropped 100 parts of the particle dispersion previously prepared, to precipitate solid. Then, this precipitate was separated, filtrated and dried, to obtain a polytetrafluoroethylene-containing thermoplastic resin modifier (A-1).

The average particle size of the alkyl (meth)acrylate-based polymer in this particle dispersion was 0.80 µm. The weigh-average molecular weight (Mw) of the alkyl (meth)acrylate-based polymer measured by gel permeation chromatography was 2,600,000.

### <Production Example 2: modifier for thermoplastic resin (A-2)>

A polytetrafluoroethylene particle dispersion (A-2-1) having a solid content of 26.2% was obtained in the same manner as in Production Example 1. 200 parts of this dispersion (A-2-1) (50 parts of polytetrafluoroethylene) was charged into a reaction vessel equipped with a stirrer, condenser, thermocouple and nitrogen introduction port by using a rotary pump (IC30S-D), then, 35 parts of distilled water, 3.0 parts of dipotassium alkenylsuccinate, 40 parts by methyl methacrylate, 10 parts of n-butyl acrylate, 0.2 parts of t-butyl hydroperoxide and 0.5 parts of n-octylmercaptane as a chain transfer agent were charged, and the atmosphere in the reaction vessel was purged with nitrogen by passing a nitrogen flow through the vessel. Then, the temperature in the system was raised to 60°C, and when the liquid temperature inside reached 60°C, a mixture composed of 0.0005 parts of iron sulfate (II), 0.0015 parts of disodium ethylenediaminetetraacetate, 0.3 parts of rongalite salt and 5 parts of distilled water was added, to initiated radical polymerization. This condition was kept for 90 minutes, to complete the polymerization. Through a series of operations, no separation of solid was observed, and a uniform particle dispersion was obtained. Thereafter, precipitation, separation, filtration and drying were conducted in the same manner as in Production Example 1, to obtain a polytetrafluoroethylene-containing thermoplastic resin modifier (A-2).

The average particle size of the alkyl (meth)acrylate-based polymer in this particle dispersion was 0.07 µm. The Mw of the alkyl (meth)acrylate-based polymer was 47,000.

### <Production Example 3: modifier for thermoplastic resin (A-3)>

A polytetrafluoroethylene particle dispersion (A-3-1) having a solid content of 26.2% was obtained in the same manner as in Production Example 1.

On the other hand, into a reaction vessel equipped with a stirrer, condenser, thermocouple and nitrogen introduction port was charged 225 parts by distilled water, 80 parts of methyl methacrylate, 20 parts of n-butyl acrylate, 0.2 parts of n-octylmercaptane and 2.5 parts of sodium dodecylbenzenesulfonate, and the atmosphere in the reaction vessel was purged with nitrogen by passing a nitrogen flow through the vessel. Then, the temperature in the system was raised to 60°C, and when the liquid temperature inside reached 60°C, a mixture composed of 0.0005 parts of iron sulfate (II), 0.0015 parts of disodium ethylenediaminetetraacetate, 0.3 parts of rongalite salt and 5 parts of distilled water was added, to initiated radical polymerization. The liquid temperature was raised up to 95°C by the initiation of polymerization. Thereafter, when the liquid temperature lowered to 80°, this condition was kept for 90 minutes, to complete the polymerization, to obtain a (meth)acrylate-based polymer particle aqueous dispersion (A-3-2). This particle aqueous dispersion (A-3-2) had a solid content of 30.4%. The average particle size of the alkyl (meth)acrylate-based polymer in this particle dispersion (A-3-2) was 0.08 µm. The Mw of the alkyl (meth)acrylate-based polymer was 50,000.

200 parts of the polytetrafluoroethylene particle dispersion (A-3-1) (50 parts of polytetrafluoroethylene) previously prepared was charged into a reaction vessel equipped with a stirrer, condenser, thermocouple and nitrogen introduction port by using a rotary pump (IC30S-D), then, 164.5 parts of the (meth)acrylate-based polymer particle aqueous dispersion (A-3-2) (50 parts of (meth)acrylate-based polymer) was charged, and the liquid inside was heated and stirred until the temperature reached 80°C. When the liquid temperature inside reached 80°C, stirring was continued for 1 hour, to obtain a mixture of both dispersions. Thereafter, precipitation, separation, filtration and drying were conducted in the same manner as in Production Example 1, to obtain a polytetrafluoroethylene-containing thermoplastic resin modifier (A-3).

### <Production Example 4: modifier for thermoplastic resin (A-4)>

A polytetrafluoroethylene particle dispersion having a solid content of 26.2% (A-4-1) was obtained in the same manner as in Production Example 1.

280 parts of this dispersion (A-4-1) (70 parts of polytetrafluoroethylene) was charged into a reaction vessel equipped with a stirrer, condenser, thermocouple and nitrogen introduction port by using a rotary pump (IC30S-D), then, the atmosphere in the reaction vessel was purged with nitrogen by passing a nitrogen flow through the vessel. Then, 4.0 parts of dipotassium alkenylsuccinate and 5 parts of distilled water were charged, and the temperature in the system was raised to 55°C and when the liquid temperature inside reached 55°C, a mixture composed of 0.1 part of potassium persulfate and 5 parts of distilled water was added, further, 24 parts of methyl methacrylate, 6 parts of n-butyl methacrylate, 0.3 parts of n-octylmercaptane were dropped over 90 minutes, and they were polymerized. After completion of dropping, the mixture was kept for about 45 minutes to complete polymerization. Throughout a series of operations, no separation of solid was observed, and a uniform particle dispersion was obtained.

On the other hand, 150 parts of an aqueous solution dissolving calcium acetate in a proportion of 7% was heated at 70°C and stirred. Into this aqueous solution was gradually dropped 100 parts of the particle dispersion previously prepared, to precipitate solid. Then, this precipitate was separated, filtrated and dried, to obtain a polytetrafluoroethylene-containing thermoplastic resin modifier (A-4).

The average particle size of the alkyl (meth)acrylate-based polymer in this particle dispersion was 0.07 µm. The weigh-average molecular weight (Mw) of the alkyl (meth)acrylate-based polymer measured by gel permeation chromatography was 20,000.

### <Production Example 5: modifier for thermoplastic resin (A-5)>

A polytetrafluoroethylene particle dispersion having a solid content of 26.2% (A-5-1) was obtained in the same manner as in Production Example 1.

Into a mixture of 35 parts of methyl methacrylate and 65 parts of dodecyl methacrylate was dissolved 0.1 part of azobisdimethylvaleronitrile. To this was added a mixture of 2.0 parts of sodium dodecylbenzenesulfonate and 225 parts of distilled water, and the mixture was stirred for 4 minutes by a homo-mixer at 10,000 rpm, then, passed twice at a pressure of 30 MPa through a homogenizer, to obtain a stable methyl methacrylate/dodecyl methacrylate previous dispersion. This was charged into a reaction vessel equipped with a stirred, condenser, thermocouple and nitrogen introduction port, and the liquid temperature inside was raised to 80°C under a nitrogen flow and stirred for 3 hours to complete radical polymerization, to obtain a (meth)acrylate-based polymer particle aqueous dispersion (A-5-2). This particle aqueous dispersion (A-5-2) had a content of 30.4%. The average particle size of the alkyl (meth)acrylate-based polymer in this particle dispersion (A-5-2) was 0.20 µm. The Mw of the alkyl (meth)acrylate-based polymer was 100000.

Into a reaction vessel equipped with a stirrer, condenser, thermocouple and nitrogen introduction port was charged 80 parts of the polytetrafluoroethylene particle dispersion (A-3-1) (20 parts of polytetrafluoroethylene) previously prepared, by using a rotary pump (IC30S-D), then, 263.2 parts of the (meth)acrylate-based polymer particle aqueous dispersion (A-5-2) (80 parts of (meth)acrylate-based polymer) was charged, and the liquid inside was heated and stirred until the temperature reached 80°C. When the liquid temperature inside reached 80°C, stirring was continued for 1 hour, to obtain a mixture of both dispersions. Thereafter, precipitation, separation, filtration and drying were conducted in the same manner as in Production Example 1, to obtain a polytetrafluoroethylene-containing thermoplastic resin modifier (A-5).

### <Production Example 6: modifier for thermoplastic resin (A-6)>

A polytetrafluoroethylene particle dispersion (A-6-1) having a solid content of 26.2% was obtained in the same manner as in Production Example 1. 165 parts of distilled water and 1.5 parts of dipotassium alkenylsuccinate were charged into a reaction vessel equipped with a stirrer, condenser, thermocouple and nitrogen introduction port, then, 200 parts of the polytetrafluoroethylene dispersion (A-6-1) (50 parts by weight of polytetrafluoroethylene) was charged into the reaction vessel using a rotary pump (IC30S-D), then, the atmosphere in the reaction vessel was purged with nitrogen by passing a nitrogen flow through the vessel. Then, the temperature in the system was raised to 55°C, and when the liquid temperature inside reached 55°C, a mixture composed of 0.1 part of potassium persulfate and 5 parts of distilled water was added, further, to this was dropped 10 parts of acrylonitrile and 40 parts of styrene over 90 minutes, and these were polymerized. After completion of dropping, the reaction mixture was kept for about 45 minutes, to complete the polymerization. Throughout a series of operations, no separation of solid was observed, and a uniform particle dispersion was obtained.

On the other hand, 150 parts of an aqueous solution dissolving calcium acetate in a proportion of 7% was heated at 98°C and stirred. Into this aqueous solution was gradually dropped 100 parts of the particle dispersion previously prepared, to precipitate solid. Then, this precipitate was separated, filtrated and dried, to obtain a polytetrafluoroethylene-containing thermoplastic resin modifier (A-6).

The average particle size of the alkyl (meth)acrylate-based polymer in this particle dispersion was 0.10 µm. The weigh-average molecular weight (Mw) of the alkyl (meth)acrylate-based polymer measured by gel permeation chromatography was 49,000.

### <Production Example 7: modifier for thermoplastic resin (A-7)>

230 parts of distilled water and 2.0 parts of dipotassium alkenylsuccinate were charged into a reaction vessel equipped with a stirrer, condenser, thermocouple and nitrogen introduction port, further, 80 parts of methyl methacrylate and 20 parts of n-butyl methacrylate were charged, then, the atmosphere in the reaction vessel was purged with nitrogen by passing a nitrogen flow through the vessel. Then, the temperature in the system was raised to 55°C, and when the liquid temperature inside reached 55°C, a mixture composed of 0.1 part of potassium persulfate and 5 parts of distilled water was added, the reaction mixture was kept for about 45 minutes, to complete the polymerization, to obtain an aqueous dispersion of a (meth)acrylate-based polymer.

In the same manner as in Example 1, a (meth)acrylate-based polymer was recovered from the aqueous dispersion of a (meth)acrylate-based polymer, to obtain a thermoplastic resin modifier (A-7). The resulted (meth)acrylate-based polymer had a Mw of 2,400,000.

### <Examples 1 to 4, Comparative Examples 1 to 3>

The evaluation results of the flowability and storage stability of the powder bodies are shown in Table 1. As the PTFE powder in the table, Aflon PTFE CD-1 (trade name: manufactured by Asahi Glass Co., Ltd.) was used.

**Table 1**

| | Ex.1 | Ex.2 | Ex.3 | Ex.4 | Comp.Ex.1 | Comp.Ex.2 | Comp.Ex.3 |
|---|---|---|---|---|---|---|---|
| PTFE-containing modifier A-1 | 100 | | | | | | |
| PTFE-containing modifier A-2 | | 100 | | | | | |
| PTFE-containing modifier A-3 | | | 100 | | | | |
| PTFE-containing modifier A-4 | | | | 100 | | | |
| PTFE powder-1 | | | | | 100 | | |
| PTFE-containing modifier A-5 | | | | | | 100 | |
| PTFE-containing modifier A-6 | | | | | | | 100 |
| Flowability of powder (g/10 sec) | 35.2 | 32.6 | 31.8 | 25.8 | 4.5 | 21.0 | No flow |
| Storage stability (sec) | 2 | 3 | 2 | 15 | >4000 | 3600 | 1500 |

### <Examples 5 to 8, Comparative Examples 4 to 7>

The components shown in table 2 were mixed at respective proportions (ratio by weight), and the mixture was shaped by a co-direction twin-screw extruder (PCM-30) set at a cylinder temperature of 260°C, to produced a pellet. Then, using this pellet, injection molding was conducted by an injection molding machine (SAV-60) set at a cylinder temperature of 260°C and a mold temperature of 80°C for combustibility test, and an injection molding machine (M-100AII-DM) set at a cylinder temperature of 260°C and a mold temperature of 80°C for physical property evaluation, to obtain respective specimens.

### <Examples 9 to 11, Comparative Examples 8 to 11>

The components shown in table 3 were mixed at respective proportions (ratio by weight), and the mixture was shaped by a co-direction twin-screw extruder (PCM-30) set at a cylinder temperature of 260°C, to produced a pellet. Then, using this pellet, injection molding was conducted by an injection molding machine (SAV-60) set at a cylinder temperature of 260°C and a mold temperature of 80°C for combustibility test, and an injection molding machine (M-100AII-DM) set at a cylinder temperature of 260°C and a mold temperature of 80°C for physical property evaluation, to obtain respective specimens.

### <Examples 13 to 16, Comparative Examples 12 to 15>

The components shown in table 4 were mixed at respective proportions (ratio by weight), and the mixture was shaped by a co-direction twin-screw extruder (PCM-30) set at a cylinder temperature of 260°C, to produced a pellet. Then, using this pellet, injection molding was conducted by an injection molding machine (SAV-60) set at a cylinder temperature of 260°C and a mold temperature of 60°C for combustibility test, and an injection molding machine (M-100AII-DM) set at a cylinder temperature of 260°C and a mold temperature of 60°C for physical property evaluation, to obtain respective specimens. I

### <Examples 17 to 20, Comparative Examples 16 to 19>

The components shown in table 5 were mixed at respective proportions (ratio by weight), and the mixture was shaped by a co-direction twin-screw extruder (PCM-30) set at a cylinder temperature of 260°C, to produced a pellet. Then, using this pellet, injection molding was conducted by an injection molding machine (SAV-60) set at a cylinder temperature of 260°C and a mold temperature of 60°C for combustibility test, and an injection molding machine (M-100AII-DM) set at a cylinder temperature of 260°C and a mold temperature of 60°C for physical property evaluation, to obtain respective specimens.

### <Examples 21 to 24, Comparative Examples 20 to 23>

The components shown in table 6 were mixed at respective proportions (ratio by weight), and the spective proportions (ratio by weight), and the mixture was shaped by a co-direction twin-screw extruder (PCM-30) set at a cylinder temperature of 250°C, to produced a pellet. Then, using this pellet, injection molding was conducted by an injection molding machine (SAV-60) set at a cylinder temperature of 250°C and a mold temperature of 80°C for combustibility test, and an injection molding machine (M-100AII-DM) set at a cylinder temperature of 250°C and a mold temperature of 80°C for physical property evaluation, to obtain respective specimens

### <Examples 25 to 28, Comparative Examples 24 to 27>

The components shown in table 7 were mixed at respective proportions (ratio by weight), and the mixture was shaped by a co-direction twin-screw extruder (PCM-30) set at a cylinder temperature of 250°C, to produced a pellet. Then, using this pellet, injection molding was conducted by an injection molding machine (SAV-60) set at a cylinder temperature of 250°C and a mold temperature of 80°C for combustibility test, and an injection molding machine (M-100AII-DM) set at a cylinder temperature of 250°C and a mold temperature of 80°C for physical property evaluation, to obtain respective specimens.

### <Examples 29 to 32, Comparative Examples 28 to 31>

The components shown in table 8 were mixed at respective proportions (ratio by weight), and the mixture was shaped by a co-direction twin-screw extruder (PCM-30) set at a cylinder temperature of 250°C, to 30) set at a cylinder temperature of 250°C, to produced a pellet. Then, using this pellet, injection molding was conducted by an injection molding machine (SAV-60) set at a cylinder temperature of 250°C and a mold temperature of 80°C for combustibility test, and an injection molding machine (M-100AII-DM) set at a cylinder temperature of 250°C and a mold temperature of 80°C for physical property evaluation, to obtain respective specimens.

### <Examples 33 to 36, Comparative Examples 32 to 35>

The components shown in table 9 were mixed at respective proportions (ratio by weight), and the mixture was shaped by a co-direction twin-screw extruder (PCM-30) set at a cylinder temperature of 250°C, to produced a pellet. Then, using this pellet, injection molding was conducted by an injection molding machine (SAV-60) set at a cylinder temperature of 250°C and a mold temperature of 80°C for combustibility test, and an injection molding machine (M-100AII-DM) set at a cylinder temperature of 250°C and a mold temperature of 80°C, for physical property evaluation, to obtain respective specimens.

### <Examples 37 to 40, Comparative Examples 36 to 39>

The components shown in table 10 were mixed at respective proportions (ratio by weight), and the mixture was shaped by a co-direction twin-screw extruder (PCM-30) set at a cylinder temperature of 250°C, to produced a pellet. Then, using this pellet, injection molding was conducted by an injection molding machine conducted by an injection molding machine (SAV-60) set at a cylinder temperature of 250°C and a mold temperature of 80°C for combustibility test, and an injection molding machine (M-100AII-DM) set at a cylinder temperature of 250°C and a mold temperature of 80°C, for physical property evaluation to obtain respective specimens.

### <Examples 41 to 44, Comparative Examples 40 to 43>

The components shown in table 11 were mixed at respective proportions (ratio by weight), and the mixture was shaped by a co-direction twin-screw extruder (PCM-30) set at a cylinder temperature of 220°C, to produced a pellet. Then, using this pellet, injection molding was conducted by an injection molding machine (SAV-60) set at a cylinder temperature of 220°C and a mold temperature of 60°C for combustibility test, and an injection molding machine (M-100AII-DM) set at a cylinder temperature of 220°C and a mold temperature of 60°C for physical property evaluation, to obtain respective specimens.

### <Examples 45 to 48, Comparative Examples 44 to 47>

The components shown in table 12 were mixed at respective proportions (ratio by weight), and the mixture was shaped by a co-direction twin-screw extruder (PCM-30) set at a cylinder temperature of 280°C, to produced a pellet. Then, using this pellet, injection molding was conducted by an injection molding machine (SAV-60) set at a cylinder temperature of 280°C and a mold temperature of 80°C for combustibility test, and an of 80°C for combustibility test, and an injection molding machine (M-100AII-DM) set at a cylinder temperature of 280°C and a mold temperature of 80°C for physical property evaluation, to obtain respective specimens.

### <Examples 49 to 52, Comparative Examples 48 to 51>

The components shown in table 13 were mixed at respective proportions (ratio by weight), and the mixture was shaped by a co-direction twin-screw extruder (PCM-30) set at a cylinder temperature of 240°C, to produced a pellet. Then, using this pellet, injection molding was conducted by an injection molding machine (SAV-60) set at a cylinder temperature of 230°C and a mold temperature of 80°C for combustibility test, and an injection molding machine (M-100AII-DM) set at a cylinder temperature of 230°C and a mold temperature of 80°C for physical property evaluation, to obtain respective specimens.

### <Examples 53 to 56, Comparative Examples 52 to 55>

The components shown in table 14 were mixed at respective proportions (ratio by weight), and the mixture was shaped by a co-direction twin-screw extruder (PCM-30) set at a cylinder temperature of 240°C, to produced a pellet. Then, using this pellet, injection molding was conducted by an injection molding machine (SAV-60) set at a cylinder temperature of 230°C and a mold temperature of 80°C for combustibility test, and an injection molding machine (M-100AII-DM) set at a cylinder temperature of 230°C and a mold temperature of 230°C and a mold temperature of 80°C for physical property evaluation, to obtain respective specimens.

### <Examples 57 to 60, Comparative Examples 56 to 59>

The components shown in table 15 were mixed at respective proportions (ratio by weight), and the mixture was shaped by a co-direction twin-screw extruder (PCM-30) set at a cylinder temperature of 240°C, to produced a pellet. Then, using this pellet, injection molding was conducted by an injection molding machine (SAV-60) set at a cylinder temperature of 240°C and a mold temperature of 60°C for combustibility test, and an injection molding machine (M-100AII-DM) set at a cylinder temperature of 240°C and a mold temperature of 60°C for physical property evaluation, to obtain respective specimens.

### <Examples 61 to 64, Comparative Examples 60 to 63>

The components shown in table 16 were mixed at respective proportions (ratio by weight), and the mixture was shaped by a co-direction twin-screw extruder (PCM-30) set at a cylinder temperature of 230°C, to produced a pellet. Then, using this pellet, injection molding was conducted by an injection molding machine (SAV-60) set at a cylinder temperature of 230°C and a mold temperature of 60°C for combustibility test, and an injection molding machine (M-100AII-DM) set at a cylinder temperature of 230°C and a mold temperature of 60°C for physical property evaluation, to obtain respective specimens.

### <Examples 65 to 68, Comparative Examples 64 to 67>

The components shown in table 17 were mixed at respective proportions (ratio by weight), and the mixture was shaped by a co-direction twin-screw extruder (PCM-30) set at a cylinder temperature of 230°C, to produced a pellet. Then, using this pellet, injection molding was conducted by an injection molding machine (SAV-60) set at a cylinder temperature of 230°C and a mold temperature of 60°C for combustibility test, and an injection molding machine (M-100AII-DM) set at a cylinder temperature of 230°C and a mold temperature of 60°C for physical property evaluation, to obtain respective specimens.

Regarding the resulted specimens, the vertical combustion test, Izod impact strength, tensile strength and tensile elongation were measured according to UL-94 standard, and the results are shown in Tables 2 to 17.

**Table 2**

| Composition | Ex.5 | Ex.6 | Ex.7 | Ex.8 | Comp. Ex.4 | Comp. Ex.5 | Comp. Ex.6 | Comp. Ex.7 |
|---|---|---|---|---|---|---|---|---|
| PC resin | 100 | 100 | 100 | 100 | 100 | 100 | 100 | 100 |
| PTFE-containing modifier A-1 | 1.5 | | | | | | | |
| (PTFE content in 100 parts of resin) | (0.3) | | | | | | | |
| PTFE-containing modifier A-2 | | 0.4 | | | | | | |
| (PTFE content in 100 parts of resin) | | (0.2) | | | | | | |
| PTFE-containing modifier A-3 | | | 0.4 | | | | | |
| (PTFE content in 100 parts of resin) | | | (0.2) | | | | | |
| PTFE-containing modifier A-4 | | | | 0.29 | | | | |
| (PTFE content in 100 parts of resin) | | | | (0.2) | | | | |
| PTFE-containing modifier A-5 | | | | | | 1.0 | | |
| (PTFE content in 100 parts of resin) | | | | | | (0.2) | | |
| PTFE-containing modifier A-6 | | | | | | | 0.4 | |
| (PTFE content in 100 parts of resin) | | | | | | | (0.2) | |
| PTFE powder-1 | | | | | | | | 0.2 |
| Flame retardant 1 | 8 | 8 | 8 | 8 | | 8 | 8 | 8 |
| Combustion test | | | | | | | | |
| UL-94V | V-0 | V-0 | V-0 | V-0 | V-2 | V-2 | V-1 | V-0 |
| Proportion of drip | 5/0 | 5/0 | 5/0 | 5/0 | 5/5 | 5/4 | 5/1 | 5/0 |
| Izod impact strength (J/m) | 835 | 840 | 840 | 850 | 840 | 840 | 850 | 843 |
| Tensile yield strength (MPa) | 59 | 58 | 59 | 59 | 59 | 59 | 58 | 57 |
| Tensile elongation (%) | 96 | 99 | 100 | 98 | 107 | 98 | 91 | 90 |
| Surface appearance | ○ | ○ | ○ | ○ | ○ | × | × | × |
| Aggregate in specimen | ○ | ○ | ○ | ○ | ○ | ○ | × | × |

**Table 3**

| Composition | Ex.9 | Ex.10 | Ex.11 | Ex.12 | Comp. Ex.8 | Comp. Ex.9 | Comp. Ex.10 | Comp. Ex.11 |
|---|---|---|---|---|---|---|---|---|
| PC resin | 100 | 100 | 100 | 100 | 100 | 100 | 100 | 100 |
| PTFE-containing modifier A-1 | 1.5 | | | | | | | |
| (PTFE content in 100 parts of resin) | (0.3) | | | | | | | |
| PTFE-containing modifier A-2 | | 0.4 | | | | | | |
| (PTFE content in 100 parts of resin) | | (0.2) | | | | | | |
| PTFE-containing modifier A-3 | | | 0.4 | | | | | |
| (PTFE content in 100 parts of resin) | | | (0.2) | | | | | |
| PTFE-containing modifier A-4 | | | | 0.29 | | | | |
| (PTFE content in 100 parts of resin) | | | | (0.2) | | | | |
| PTFE-containing modifier A-5 | | | | | | 1.0 | | |
| (PTFE content in 100 parts of resin) | | | | | | (0.2) | | |
| PTFE-containing modifier A-6 | | | | | | | 0.4 | |
| (PTFE content in 100 parts of resin) | | | | | | | (0.2) | |
| PTFE powder-1 | | | | | | | | 0.2 |
| Flame retardant 2 | 12 | 12 | 12 | 12 | | 12 | 12 | 12 |
| Flame retardant aid 1 | 6 | 6 | 6 | 6 | | 6 | 6 | 6 |

| Combustion test | | | | | | | | |
|---|---|---|---|---|---|---|---|---|
| UL-94V | V-0 | V-0 | V-0 | V-0 | V-2 | V-2 | V-1 | V-0 |
| Proportion of drip | 5/0 | 5/0 | 5/0 | 5/0 | 5/5 | 5/2 | 5/1 | 5/0 |
| Izod impact strength (J/m) | 845 | 841 | 843 | 849 | 840 | 830 | 845 | 840 |
| Tensile yield strength (MPa) | 59 | 58 | 60 | 58 | 59 | 56 | 58 | 57 |
| Tensile elongation (%) | 92 | 91 | 95 | 93 | 107 | 98 | 91 | 90 |
| Surface appearance | ○ | ○ | ○ | ○ | ○ | × | × | × |

**Table 4**

| Composition | Ex.13 | Ex.14 | Ex.15 | Ex.16 | Comp. Ex.12 | Comp. Ex.13 | Comp. Ex.14 | Comp. Ex.15 |
|---|---|---|---|---|---|---|---|---|
| PC resin | 80 | 80 | 80 | 80 | 80 | 80 | 80 | 80 |
| Graft copolymer 1 (ABS) | 10 | 10 | | 10 | 10 | | 10 | 10 |
| Graft copolymer 2 (AAS) | | | 10 | | | 10 | | |
| Vinyl-based copolymer (SAN) | 10 | 10 | 10 | 10 | 10 | 10 | 10 | 10 |
| PTFE-containing modifier A-1 | 1.5 | | | | | | | |
| (PTFE content in 100 parts of resin) | (0.3) | | | | | | | |
| PTFE-containing modifier A-2 | | 0.4 | | | | | | |
| (PTFE content in 100 parts of resin) | | (0.2) | | | | | | |
| PTFE-containing modifier A-3 | | | 0.4 | | | | | |
| (PTFE content in 100 parts of resin) | | | (0.2) | | | | | |
| PTFE-containing modifier A-4 | | | | 0.4 | | | | |
| (PTFE content in 100 parts of resin) | | | | (0.2) | | | | |
| PTFE-containing modifier A-5 | | | | | | 1.5 | | |
| (PTFE content in 100 parts of resin) | | | | | | (0.3) | | |
| PTFE-containing modifier A-6 | | | | | | | 0.4 | |
| (PTFE content in 100 parts of resin) | | | | | | | (0.2) | |
| PTFE powder-1 | | | | | | | | 0.3 |
| Flame retardant 1 | 10 | 10 | 10 | 10 | 10 | 10 | 10 | 10 |

| Combustion test | | | | | | | | |
|---|---|---|---|---|---|---|---|---|
| UL-94V | V-0 | V-0 | V-0 | V-0 | Not passed | V-2 | V-1 | V-0 |
| Proportion of drip | 5/0 | 5/0 | 5/0 | 5/0 | 5/5 | 5/4 | 5/0 | 5/0 |
| Izod impact strength (J/in) | 720 | 750 | 750 | 760 | 740 | 750 | 792 | 750 |
| Tensile yield strength (MPa) | 56 | 55 | 57 | 55 | 58 | 57 | 55 | 54 |
| Tensile elongation (%) | 65 | 62 | 64 | 62 | 68 | 66 | 63 | 68 |
| Surface-appearance | ○ | ○ | ○ | ○ | ○ | × | × | × |

**Table 5**

| Composition | Ex.17 | Ex.18 | Ex.19 | Ex.20 | Comp. Ex.16 | Comp. Ex.17 | Comp. Ex.18 | Comp. Ex.19 |
|---|---|---|---|---|---|---|---|---|
| PC resin | 80 | 80 | 80 | 80 | 80 | 80 | 80 | 80 |
| Graft copolymer 1 (ABS) | 10 | 10 | | 10 | 10 | | 10 | 10 |
| Graft copolymer 2 (AAS) | | | 10 | | | 10 | | |
| Vinyl-based copolymer (SAN) | 10 | 10 | 10 | 10 | 10 | 10 | 10 | 10 |
| PTFE-containing modifier A-1 | 1.5 | | | | | | | |
| (PTFE content in 100 parts of resin) | (0.3) | | | | | | | |
| PTFE-containing modifier A-2 | | 0.4 | | | | | | |
| (PTFE content in 100 parts of resin) | | (0.2) | | | | | | |
| PTFE-containing modifier A-3 | | | 0.4 | | | | | |
| (PTFE content in 100 parts of resin) | | | (0.2) | | | | | |
| PTFE-containing modifier A-4 | | | | 0.4 | | | | |
| (PTFE content in 100 parts of resin) | | | | (0.2) | | | | |
| PTFE-containing modifier A-5 | | | | | | 1.5 | | |
| (PTFE content in 100 parts of resin) | | | | | | (0.3) | | |
| PTFE-containing modifier A-6 | | | | | | | 0.4 | |
| (PTFE content in 100 parts of resin) | | | | | | | (0.2) | |
| PTFE powder-1 | | | | | | | | 0.3 |
| Flame retardant 2 | 13 | 13 | 13 | 13 - | 13 | 13 | 13 | 13 |
| Flame retardant aid 2 | 6.5 | 6.5 | 6.5 | 6.5 | 6.5 | 6.5 | 6.5 | 6.5 |
| Combustion test | | | | | | | | |
| UL-94V | V-0 | V-0 | V-0 | V-0 | Not passed | V-2 | V-1 | V-0 |
| Proportion of drip | 5/0 | 5/0 | 5/0 | 5/0 | 5/5 | 5/5 | 5/0 | 5/0 |
| Izod impact strength (J/m) | 700 | 720 | 720 | 720 | 738 | 715 | 730 | 710 |
| Tensile yield strength (MPa) | 50 | 50 | 51 | 50 | 48 | 45 | 52 | 50 |
| Tensile elongation (%) | 61 | 61 | 62 | 63 | 60 | 64 | 59 | 60 |
| Surface appearance | ○ | ○ | ○ | ○ | ○ | × | × | × |

**Table 6**

| Composition | Ex.21 | Ex.22 | Ex.23 | Ex.24 | Comp. Ex.20 | Comp. Ex.21 | Comp. Ex.22 | Comp. Ex.23 |
|---|---|---|---|---|---|---|---|---|
| PC resin | 65 | 65 | 65 | 65 | 65 | 65 | 65 | 65 |
| PBT resin | 25 | 25 | 25 | 25 | 25 | 25 | 25 | 25 |
| Graft copolymer (SAS) | 15 | 15 | 15 | 15 | 15 | 15 | 15 | 15 |
| PTFE-containing modifier A-1 | 2.5 | | | | | | | |
| (PTFE content in 100 parts of resin) | (0.5) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.5 | | |
| (PTFE content in 100 parts of resin) | | | | | | (0.5) | | |
| PTFE-containing modifier A-6 | | | | | | | 0.8 | |
| (PTFE content in 100 parts of resin) | | | | | | | (0.4) | |
| PTFE powder-1 | | | | | | | | 0.4 |
| Flame retardant 2 | 16 | 16 | 16 | 16 | 16 | 16 | 16 | 16 |
| Flame retardant aid 2 | 8 | 8 | 8 | 8 | 8 | 8 | 8 | 8 |
| Combustion test | | | | | | | | |
| UL-94V . | V-0 | V-0 | V-0 | V-0 | Not passed | Not passed | V-1 | V-2 |
| Proportion of drip | 5/0 | 5/0 | 5/0 | 5/0 | 5/5 | 5/5 | 5/1 | 5/5 |
| Izod impact strength (J/m) | 205 | 212 | 205 | 210 | 200 | 211 | 210 | 210 |
| Tensile yield strength (MPa) | 46 | 46 | 48 | 49 | 49 | 45 | 49 | 48 |
| Tensile elongation (%) | 92 | 93 | 95 | 93 | 100 | 90 | 90 | 91 |
| Surface appearance | ○ | ○ | ○ | ○ | ○ | × | × | × |

**Table 7**

| Composition | Ex.25 | Ex.26 | Ex.27 | Ex.28 | Comp. Ex.24 | Comp. Ex.25 | Comp. Ex.26 | Comp. Ex.27 |
|---|---|---|---|---|---|---|---|---|
| PC resin | 65 | 65 | 65 | 65 | 65 | 65 | 65 | 65 |
| PBT resin | 25 | 25 | 25 | 25 | 25 | 25 | 25 | 25 |
| Graft copolymer (SAS) | 15 | 15 | 15 | 15 | 15 | 15 | 15 | 15 |
| PTFE-containing modifier A-1 | 2.5 | | | | | | | |
| (PTFE content in 100 parts of resin) | (0.5) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.5 | | |
| (PTFE content in 100 parts of resin) | | | | | | (0.5) | | |
| PTFE-containing modifier A-6 | | | | | | | 0.8 | |
| (PTFE content in 100 parts of resin) | | | | | | | (0.4) | |
| PTFE powder-1 | | | | | | | | 0.5 |
| Flame retardant 3 | 2 | 2 | 2 | 2 | 2 | 2 | 2 | 2 |
| Combustion test | | | | | | | | |
| UL-94V | V-0 | V-0 | V-0 | V-0 | Not passed | V-2 | V-1 | V-2 |
| Proportion of drip | 5/0 | 5/0 | 5/0 | 5/0 | 5/5 | 5/5 | 5/1 | 5/5 |
| Izod impact strength (J/m) | 210 | 205 | 220 | 220 | 208 | 211 | 216 | 200 |
| Tensile yield strength (MPa) | 47 | 45 | 42 | 49 | 50 | 45 | 54 | 45 |
| Tensile elongation (%) | 90 | 94 | 98 | 100 | 100 | 91 | 90 | 93 |
| Surface appearance | ○ | ○ | ○ | ○ | ○ | × | × | × |

**Table 8**

| Composition | Ex.29 | Ex.30 | Ex.31 | Ex.32 | Comp. Ex.28 | Comp. Ex.29 | Comp. Ex.30 | Comp. Ex.31 |
|---|---|---|---|---|---|---|---|---|
| PBT resin | 70 | 70 | 70 | 70 | 70 | 70 | 70 | 70 |
| Graft copolymer 1 (ABS) | 30 | 30 | 30 | 30 | 30 | 30 | 30 | 30 |
| PTFE-containing modifier A-1 | 2.5 | | | | | | | |
| (PTFE content in 100 parts of resin) | (0.5) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.5 | | |
| (PTFE content in 100 parts of resin) | | | | | | (0.5) | | |
| PTFE-containing modifier A-6 | | | | | | | 0.8 | |
| (PTFE content in 100 parts of resin) | | | | | | | (0.4) | |
| PTFE powder-1 | | | | | | | | 0.4 |
| Flame retardant 2 | 16 | 16 | 16 | 16 | 16 | 16 | 16 | 16 |
| Flame retardant aid | 8 | 8 | 8 | 8 | 8 | 8 | 8 | 8 |
| Combustion test | | | | | | | | |
| | | | | | Not | Not | | |
| UL-94V | V-0 | V-0 | V-0 | V-0 | passed | passed | V-1 | V-2 |
| Proportion of drip | 5/0 | 5/0 | .5/0 | 5/0 | 5/5 | 5/5 | 5/3 | 5/5 |
| Izod impact strength (J/m) | 205 | 210 | 213 | 210 | 196 | 195 | 210 | 210 |
| Tensile yield strength (MPa) | 39 | 39 | 39 | 38 | 39 | 38 | 40 | 39 |
| Tensile elongation (%) | 38 | 38 | 38 | 38 | 40 | 36 | 38 | 42 |
| Surface appearance | ○ | ○ | ○ | ○ | ○ | × | × | × |

**Table 9**

| Composition | Ex.33 | Ex.34 | Ex.35 | Ex.36 | Comp. Ex.32 | Comp. Ex.33 | Comp. Ex.34 | Comp. Ex.35 |
|---|---|---|---|---|---|---|---|---|
| PBT resin | 100 | 100 | 100 | 100 | 100 | 100 | 100 | 100 |
| PTFE-containing modifier A-1 | 2.5 | | | | | | | |
| (PTFE-content in 100 parts of resin) | (0.5) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.5 | | |
| (PTFE content in 100 parts of resin) | | | | | | (0.5) | | |
| PTFE-containing modifier A-6 | | | | | | | 0.8 | |
| (PTFE content in 100 parts of resin) | | | | | | | (0.4) | |
| PTFE powder-1 | | | | | | | | 0.4 |
| Flame retardant 3 | 2 | 2 | 2 | 2 | 2 | 2 | 2 | 2 |
| Combustion test | | | | | | | | |
| | | | | | Not | Not | | |
| UL-94V | V-0 | V-0 | V-0 | V-0 | passed | passed | V-1 | V-2 |
| Proportion of drip | 5/0 | 5/0 | 5/0 | 5/0 | 5/5 | 5/5 | 5/3 | 5/5 |
| Izod impact strength (J/m) | 34 | 35 | 32 | 35 | 40 | 31 | 36 | 33 |
| Tensile yield strength (MPa) | 52 | 53 | 53 | 54 | 56 | 50 | 55 | 54 |
| Tensile elongation (%) | 140 | 141 | 142 | 141 | 160 | 150 | 140 | 143 |
| Surface appearance | ○ | ○ | ○ | ○ | ○ | × | × | × |

**Table 10**

| Composition | Ex.37 | Ex.38 | Ex.39 | Ex.40 | Comp. Ex.36 | Comp. Ex.37 | Comp. Ex.38 | Comp. Ex.39 |
|---|---|---|---|---|---|---|---|---|
| PBT resin | 100 | 100 | 100 | 100 | 100 | 100 | 100 | 100 |
| PTFE-containing modifier A-1 | 2.5 | | | | | | | |
| (PTFE content in 100 parts of resin) | (0.5) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.5 | | |
| (PTFE content in 100 parts of resin) | | | | | | (0.5) | | |
| PTFE-containing modifier A-6 | | | | | | | 0.8 | |
| (PTFE content in 100 parts of resin) | | | | | | | (0.4) | |
| PTFE powder-1 | | | | | | | | 0.4 |
| Flame retardant 4 | 14 | 14 | 14 | -14 | 14 | 14 | 14 | 14 |
| Flame retardant aid | 7 | 7 | 7 | 7 | 7 | 7 | 7 | 7 |
| Combustion test | | | | | | | | |
| UL-94V | V-0 | V-0 | V-0 | V-0 | Not passed | Not passed | V-1 | V-2 |
| Proportion of drip 5/0 | 5/0 | 5/0 | 5/0 | 5/0 | 5/5 | 5/5 | 5/3 | 5/5 |
| Izod impact strength (J/m) | 39 | 38 | 39 | 39 | 40 | 32 | 40 | 38 |
| Tensile yield strength (MPa) | 60 | 63 | 63 | 64 | 56 | 52 | 65 | 64 |
| Tensile elongation (%) | 120 | 121 | 122 | 120 | 160 | 110 | 120 | 123 |
| Surface appearance | ○ | ○ | ○ | ○ | ○ | × | × | × |

**Table 11**

| Composition | Ex.41 | Ex.42 | Ex.43 | Ex.47 | Comp. Ex.40 | Comp. Ex.41 | Comp. Ex.42 | Comp. Ex.43 |
|---|---|---|---|---|---|---|---|---|
| Graft copolymer 1 (ABS) | 30 | 30 | 30 | 30 | 30 | 30 | 30 | 30 |
| Vinyl-based copolymer (SAN) | 70 | 70 | 70 | 70 | 70 | 70 | 70 | 70 |
| PTFE-containing modifier A-1 | 0.5 | | | | | | | |
| (PTFE content in 100 parts of resin) | (0.08) | | | | | | | |
| PTFE-containing modifier A-2 | | 0.16 | | | | | | |
| (PTFE content in 100 parts of resin) | | (0.08) | | | | | | |
| PTFE-containing modifier A-3 | | | 0.16 | | | | | |
| (PTFE content in 100 parts of resin) | | | (0.08) | | | | | |
| PTFE-containing modifier A-4 | | | | 0.11 | | | | |
| (PTFE content in 100 parts of resin) | | | | (0.08) | | | | |
| PTFE-containing modifier A-5 | | | | | | 0.5 | | |
| (PTFE content in 100 parts of resin) | | | | | | (0.08) | | |
| PTFE-containing modifier A-6 | | | | | | | 0.16 | |
| (PTFE content in 100 parts of resin) | | | | | | | (0.08) | |
| PTFE powder-2 | | | | | | | | 0.1 |
| Flame retardant 2 | 24 | 24 | 24 | 24 | 24 | 24 | 24 | 24 |
| Flame retardant aid | 12 | 12 | 12 | 12 | 12 | 12 | 12 | 12 |
| Combustion test | | | | | | | | |
| | | | | | Not | | | |
| UL-94V | V-0 | V-0 | V-0 | V-0 | passed | V-1 | V-0 | V-1 |
| Proportion of drip | 5/0 | 5/0 | 5/0 | 5/0 | 5/5 | 5/3 | 5/0 | 5/0 |
| Izod impact strength (J/m) | 170 | 163 | 163 | 163 | 173 | 181 | 169 | 163 |
| Tensile yield strength (MPa) | 46 | 45 | 46 | 45 | 46 | 46 | 46 | 46 |
| Tensile elongation (%) | 10 | 10 | 9 | 9 | 7 | 10 | 7 | 8 |
| Surface appearance | ○ | ○ | ○ | ○ | ○ | × | × | × |

**Table 12**

| Composition | Ex.45 | Ex.46 | Ex.47 | Ex.48 | Comp. Ex.44 | Comp. Ex.45 | Comp. Ex.46 | Comp. Ex.47 |
|---|---|---|---|---|---|---|---|---|
| PPE resin | 60 | 60 | 60 | 60 | 60 | 60 | 60 | 60 |
| PS resin | 40 | 40 | 40 | 40 | 40 | 40 | 40 | 40 |
| PTFE-containing modifier A-1 | 1.5 | | | | | | | |
| (PTFE content in 100 parts of resin) | (0.3) | | | | | | | |
| PTFE-containing modifier A-2 | | 0.6 | | | | | | |
| (PTFE content in 100 parts of resin) | | (0.3) | | | | | | |
| PTFE-containing modifier A-3 | | | 0.6 | | | | | |
| (PTFE content in 100 parts of resin) | | | (0.3) | | | | | |
| PTFE-containing modifier A-4 | | | | 0.43 | | | | |
| (PTFE content in 100 parts of resin) | | | | (0.3) | | | | |
| PTFE-containing modifier A-5 | | | | | | 0.6 | | |
| (PTFE content in 100 parts of resin) | | | | | | (0.3) | | |
| PTFE-containing modifier A-6 | | | | | | | 0.6 | |
| (PTFE content in 100 parts of resin) | | | | | | | (0.3) | |
| PTFE powder-1 | | | | | | | | 0.3 |
| Flame retardant 1 | 10 | 10 | 10 | 10 | 10 | 10 | 10 | 10 |
| Combustion test | | | | | | | | |
| | | | | | | Not | | |
| UL-94V | V-0 | V-0 | V-0 | V-0 | V-2 | passed | V-1 | V-0 |
| Proportion of drip | 5/0 | 5/0 | 5/0 | 5/0 | 5/5 | 5/5 | 5/0 | 5/0 |
| Izod impact strength (J/m) | 121 | 126 | 125 | 125 | 130 | 114 | 130 | 125 |
| Tensile yield strength (MPa) | 56 | 58 | 58 | 58 | 56 | 55 | 58 | 55 |
| Tensile elongation (%) | 27 | 28 | 28 | 28 | 30 | 24 | 30 | 27 |
| Surface appearance | ○ | ○ | ○ | ○ | ○ | × | × | × |

**Table 13**

| Composition | Ex.49 | Ex.50 | Ex.51 | Ex.52 | Comp. Ex.48 | Comp. Ex.49 | Comp. Ex.50 | Comp. Ex.51 |
|---|---|---|---|---|---|---|---|---|
| Ny6 resin | 100 | 100 | 100 | 100 | 100 | 100 | 100 | 100 |
| PTFE-containing modifier A-1 | 2.0 | | | | | | | |
| (PTFE content in 100 parts of resin) | (0.4) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.0 | | |
| (PTFE content in 100 parts of resin) | | | | | | (0.4) | | |
| PTFE-containing modifier A-6 | | | | | | | 0.8 | |
| (PTFE content in 100 parts of resin) | | | | | | | (0.4) | |
| PTFE powder-1 | | | | | | | | 0.4 |
| Flame retardant 2 | 15 | 15 | 15 | 15 | 15 | 15 | 15 | 15 |
| Flame retardant aid | 8.5 | 8.5 | 8.5 | 8.5 | 8.5 | 8.5 | 8.5 | 8.5 |
| Combustion test | | | | | | | | |
| UL-94V | V-0 | V-0 | V-0 | V-0 | Not Passed | V-1 | V-0 | V-0 |
| Proportion of drip | 5/0 | 5/0 | 5/0 | 5/0 | 5/5 | 5/0 | 5/0 | 5/0 |
| Izod impact strength (J/m) | 235 | 240 | 240 | 240 | 480 | 220 | 240 | 240 |
| Tensile yield strength (MPa) | 38 | 40 | 40 | 40 | 38 | 25 | 45 | 40 |
| Tensile elongation (%) | 17 | 18 | 17 | 17 | 17 | 13 | 15 | 18 |
| Surface appearance | ○ | ○ | ○ | ○ | ○ | × | × | × |

**Table 14**

| Composition | Ex.53 | Ex.54 | Ex.55 | Ex.56 | Comp. Ex.52 | Comp. Ex.53 | Comp. Ex.54 | Comp. Ex.55 |
|---|---|---|---|---|---|---|---|---|
| Ny6 resin | 100 | 100 | 100 | 100 | 100 | 100 | 100 | 100 |
| PTFE-containing modifier A-1 | 2.0 | | | | | | | |
| (PTFE content in 100 parts of resin) | (0.4) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.0 | | |
| (PTFE content in 100 parts of resin) | | | | | | (0.4) | | |
| PTFE-containing.modifier A-6 | | | | | | | 0.8 | |
| (PTFE content in 100 parts of resin) | | | | | | | (0.4) | |
| PTFE powder-1 | | | | | | | | 0.4 |
| Flame retardant 3 | 5 | 5 | 5 | 5 | 5 | 5 | 5 | 5 |
| Combustion test | | | | | | | | |
| UL-94V | V-0 | V-0 | V-0 | V-0 | Not Passed | V-2 | V-0 | V-0 |
| Proportion of drip | 5/0 | 5/0 | 5/0 | 5/0 | 5/5 | 5/5 | 5/0 | 5/0 |
| Izod impact strength (J/m) | 240 | 240 | 238 | 239 | 480 | 230 | 245 | 235 |
| Tensile yield strength (MPa) | 37 | 39 | 39 | 39 | 38 | 30 | 43 | 41 |
| Tensile elongation (%) | 20 | 19 | 18 | 18 | 18 | 15 | 20 | 18 |
| Surface appearance | ○ | ○ | ○ | ○ | ○ | × | × | × |

**Table 15**

| Composition | Ex.57 | Ex.58 | Ex.59 | Ex.60 | Comp. Ex.56 | Comp. Ex.57 | Comp. Ex.58 | Comp. Ex.59 |
|---|---|---|---|---|---|---|---|---|
| PSt resin | 100 | 100 | 100 | 100 | 100 | 100 | 100 | 100 |
| PTFE-containing modifier A-1 | 2.0 | | | | | | | |
| (PTFE content in 100 parts of resin) | (0.4) | | | | | | | |
| PTFE-containing modifier A-2 | | 0.8 | | | | | | |
| (PTFE content in 100 parts of resin) | | (0.4) | | | | | | |
| PTFE-containing modifier A-3 | | | 0.8 | | | | | |
| (PTFE content in 100 parts of resin) | | | (0.4) | | | | | |
| PTFE-containing modifier A-4 | | | | 0.57 | | | | |
| (PTFE content in 100 parts of resin) | | | | (0.4) | | | | |
| PTFE-containing modifier A-5 | | | | | | 2.0 | | |
| (PTFE content in 100 parts of resin) | | | | | | (0.4) | | |
| PTFE-containing modifier A-6 | | | | | | | 0.8 | |
| (PTFE content in 100 parts of resin) | | | | | | | (0.4) | |
| PTFE powder-1 | | | | | | | | 0.4 |
| Flame retardant 2 | 20 | 20 | 20 | 20 | 20 | 20 | 20 | 20 |
| Flame retardant aid 1 | 10 | 10 | 10 | 10 | 10 | 10 | 10 | 10 |
| Combustion test | | | | | | | | |
| UL-94V | V-0 | V-0 | V-0 | V-0 | Not passed | Not passed | V-1 | V-0 |
| Proportion of drip | 5/0 | 5/0 | 5/0 | 5/0 | 5/5 | 5/5 | 5/0 | 5/0 |
| Izod impact strength (J/m) | 14 | 13 | 13 | 14 | 14 | 9 | 12 | 14 |
| Tensile yield strength (MPa) | 43 | 42 | 43 | 43 | 44 | 38 | 43 | 41 |
| Tensile elongation (%) | 3 | 3 | 3 | 3 | 3 | 3 | 3 | 3 |
| Surface appearance | ○ | ○ | ○ | ○ | ○ | × | × | × |

**Table 16**

| Composition | Ex.61 | Ex.62 | Ex.63 | Ex.64 | Comp. Ex.60 | Comp. Ex.61 | Comp. Ex.62 | Comp. Ex.63 |
|---|---|---|---|---|---|---|---|---|
| PP resin | 100 | 100 | 100 | 100 | 100 | 100 | 100 | 100 |
| PTFE-containing modifier A-1 | 2.5 | | | | | | | |
| (PTFE content in 100 parts of resin) | (0.5) | | | | | | | |
| PTFE-containing modifier A-2 | | 1.0 | | | | | | |
| (PTFE content in 100 parts of resin) | | (0.5) | | | | | | |
| PTFE-containing modifier A-3 | | | 1.0 | | | | | |
| (PTFE content in 100 parts of resin) | | | (0.5) | | | | | |
| PTFE-containing modifier A-4 | | | | 0.57 | | | | |
| (PTFE content in 100 parts of resin) | | | | (0.5) | | | | |
| PTFE-containing modifier A-5 | | | | | | 1.0 | | |
| (PTFE content in 100 parts of resin) | | | | | | (0.5) | | |
| PTFE-containing modifier A-6 | | | | | | | 1.0 | |
| (PTFE content in 100 parts of resin) | | | | | | | (0.5) | |
| PTFE powder-1 | | | | | | | | 0.5 |
| Flame retardant 6 | 150 | 150 | 150 | 150 | 150 | 150 | 150 | 150 |
| Combustion test | | | | | | | | |
| UL-94V | V-0 | V-0 | V-0 | V-0 | Not passed | V-2 | V-2 | V-1 |
| Proportion of drip | 5/0 | 5/0 | 5/0 | 5/0 | 5/5 | 5/5 | 5/5 | 5/3 |
| Izod impact strength (J/m) | 72 | 75 | 76 | 73 | 74 | 64 | 62 | 70 |
| Tensile yield strength (MPa) | 20 | 21 | 21 | 21 | 19 | 23 | 17 | 20 |
| Tensile elongation (%) | 7 | 7 | 7 | 8 | 7 | 8 | 6 | 5 |
| Surface appearance | ○ | ○ | ○ | ○ | ○ | × | × | × |

**Table 17**

| Composition | Ex.65 | Ex.66 | Ex.67 | Ex.68 | Comp. Ex.64 | Comp. Ex.65 | Comp. Ex.66 | Comp. Ex.67 |
|---|---|---|---|---|---|---|---|---|
| PE resin | 100 | 100 | 100 | 100 | 100 | 100 | 100 | 100 |
| PTFE-containing modifier A-1 | 2.5 | | | | | | | |
| (PTFE content in 100.parts of resin) | (0.5) | | | | | | | |
| PTFE-containing modifier A-2 | | 1.0 | | | | | | |
| (PTFE content in 100 parts of resin) | | (0.5) | | | | | | |
| PTFE-containing modifier A-3 | | | 1.0 | | | | | |
| (PTFE content in 100 parts of resin) | | | 1(0.5) | | | | | |
| PTFE-containing modifier A-4 | | | | 0.57 | | | | |
| (PTFE content in 100 parts of resin) | | | | (0.5) | | | | |
| PTFE-containing modifier A-5 | | | | | | 1.0 | | |
| (PTFE content in 100 parts of resin) | | | | | | (0.5) | | |
| PTFE-containing modifier A-6 | | | | | | | 1.0 | |
| (PTFE content in 100 parts of resin) | | | | | | | (0.5) | |
| PTFE powder-1 | | | | | | | | 0.5 |
| Flame retardant 6 | 150 | 150 | 150 | 150 | 150 | 150 | 150 | 150 |
| Combustion test | | | | | | | | |
| UL-94V | V-0 | V-0 | V-0 | V-0 | Not passed | V-2 | V-2 | V-1 |
| Proportion of drip | 5/0 | 5/0 | 5/0 | 5/0 | 5/5 | 5/5 | 5/5 | 5/3 |
| Izod impact strength (J/m) | 61 | 60 | 62 | 62 | 61 | 54 | 55 | 61 |
| Tensile yield strength (MPa) | 19 | 20 | 19 | 19 | 20 | 17 | 14 | 20 |
| Tensile elongation (%) | 8 | 8 | 8 | 8 | 7 | 8 | 6 | 6 |
| Surface appearance | ○ | ○ | ○ | ○ | ○ | × | × | × |

As the composition components in Tables 2 to 17, the following components were specifically used.
· "PC resin" : polycarbonate resin, manufactured by Mitsubishi Engineering Plastics K.K., trade name: Jupiron S-2000F
· "PBT resin" : polybutylene terephthalate resin, manufactured by Mitsubishi Rayon Co., Ltd., trade name: Tafpet N1000
· "PPE resin" : polyphenylene ether resin; the used polyphenylene ether resin is poly(2,6-dimethyl-1,4-phenylene) ether, had a reduced viscosity measured by Ubbellohde viscometer in a 0.1% chloroform solution at 25°C of 0.59
· "PSt resin" : polystyrene resin, manufactured by Nippon Polystyrene K.K., trade name: G440K
· "Ny6 resin" : polyamide resin, manufactured by Ube Industries. Ltd., trade name: UBE Nylon 1013B
· "PP resin" : polypropylene resin, manufactured by Nippon Polychem K.K., trade name: Novatec PP BC6
· "PE resin" : polyethylene resin, manufactured by Nippon Polychem K.K., trade name: Novatec LD LC522
· "Graft copolymer 1 (ABS)" : ABS graft copolymer, manufactured by Mitsubishi Rayon Co., Ldt., trade name: R-80
· "Graft copolymer 2 (AAS)" : Acrylonitrile-butyl acrylate-styrene graft copolymer, manufactured by Mitsubishi Rayon Co., Ldt., trade name: MUX-80
· "Graft copolymer 3 (SAS)" : Acrylonitrile-butyl acrylate-silicone graft copolymer, manufactured by Mitsubishi Rayon Co., Ldt., trade name: RK-200
· "Vinyl-based copolymer (SAN copolymer)" : Acrylonitrile-styrene copolymer, manufactured by Mitsubishi Rayon Co., Ldt., trade name: AP-20
· "PTFE-containing modifier A-1" : polytetrafluoroethylene-containing modifier (A-1) obtained in Production Example 1
· "PTFE-containing modifier A-2" : polytetrafluoroethylene-containing modifier (A-2) obtained in Production Example 2
· "PTFE-containing modifier A-3" : polytetrafluoroethylene-containing modifier (A-3) obtained in Production Example 3
· "PTFE-containing modifier A-4" : polytetrafluoroethylene-containing modifier (A-4) obtained in Production Example 4
· "PTFE-containing modifier A-5" : polytetrafluoroethylene-containing modifier (A-5) obtained in Production Example 5
· "PTFE-containing modifier A-6" : polytetrafluoroethylene-containing modifier (A-6) obtained in Production Example 6
· "Flame retardant 1" : Triphenyl phosphate, manufactured by Daihachi Kagaku Kogyo K.K., trade name: TTP
· "Flame retardant 2" : halogenated epoxy oligomer, manufactured by Bromine Compounds Ltd., trade name: F2400
· "Flame retardant 3" : red phosphorus, manufactured by Rin Kagaku Kogyo K.K., trade name: Norba Red 120
· "Flame retardant 4" : tetrabisphenol A carbonate oligomer, manufactured by Teijin Chemical K.K., trade name: FG-7500
· "Flame retardant 5" : tetrabisphenol A, manufactured by Tosoh Corp., trade name: Flame Cut 120R
· "Flame retardant 6" : magnesium hydroxide, manufac· tured by Kyowa Kagaku Kogyo K.K., trade name: Kisma 5A
· "Flame retardant aid 1" : antimony trioxide, manufactured by Nippon Seiko K.K., trade name: Patox M
· "PTFE powder 1" : polytetrafluoroethylene, manufactured by Asahi Glass Co. Ltd., trade name: Aflon PTFE CD-1
· "PTFE powder 2" : polytetrafluoroethylene, manufactured by Daikin Industries Ltd., trade name: F201L

### <Examples 69 to 73, Comparative Examples 68 to 77>

Compositions to which the modifier for thermoplastic resin of the present invention had been added, and compositions to which a PTFE powder or modifier for thermoplastic resin (A-3) had been added, or no PTFE powder had been added, for comparative, were prepared, and bottle molding was conducted by a blow molding machine having a screw diameter of 40 mm. The evaluation results are shown in Table 18.

**Table 18**

| | Resin | PTFE-containing modifier (A-3) | PTFE powder | Draw down in molding | Appearance of bottle |
|---|---|---|---|---|---|
| Ex.69 | ABS resin | 0.6 | | ○ | ○ |
| Comp.Ex.68 | ABS resin | | 0.3 | × | × |
| Comp.Ex.69 | ABS resin | | | × | × |
| Ex.70 | PC resin | 0.6 | | ○ | ○ |
| Comp.Ex.70 | PC resin | | 0.3 | × | × |
| Comp.Ex.71 | PC resin | | | × | × |
| Ex.71 | PET resin | 0.6 | | ○ | ○ |
| Comp.Ex.72 | PET resin | | 0.3 | × | × |
| Comp.Ex.73 | PET resin | | | × | × |
| Ex.72 | PS resin | 0.6 | | ○ | ○ |
| Comp.Ex.74 | PS resin | | 0.3 | × | × |
| Comp.Ex.75 | PS resin | | | × | × |
| Ex.73 | PE resin | 0.6 | | ○ | ○ |
| Comp.Ex.76 | PE resin | | 0.3 | × | × |
| Comp.Ex.77 | PE resin | | | × | × |

The resins specifically used as the resins in Table 18, bottle molding conditions, and evaluation methods are shown below.
· "ABS resin" : ABS graft copolymer, manufactured by Mitsubishi Rayon Co., Ltd., trade name: Diapet 3001
   Molding conditions: cylinder temperature (C1): 180 °C, (C2): 200°C, (C3): 200°C, head: 200°C, dice: 200°C
· "PC resin" : polycarbonate resin, manufactured by Mitsubishi Engineering Plastics K.K., trade name: Novalex 7022A
   Molding conditions: cylinder temperature (C1): 230 °C, (C2): 260°C, (C3): 270°C, head: 270°C, dice: 280°C
· "PET resin" : polyethylene terephthalate resin, manufactured by Mitsubishi Rayon Co., Ltd., trade name: Dianite A-200
   Molding conditions: cylinder temperature (C1): 280 °C, (C2): 280°C, (C3): 280°C, head: 260°C, dice: 260°C
· "PS resin" : polystyrene resin, manufactured by Nippon Polystyrene K.K.; trade name: G440K
   Molding conditions: cylinder temperature (C1): 160 °C, (C2) : 180°C, (C3): 200°C, head: 200°C, dice: 210°C
· "PE resin" : polyethylene resin, manufactured by Mitsui Chemical Co., Ltd.; trade name: Highzex 7000F
   Molding conditions: cylinder temperature (C1): 150 °C, (C2): 165°C, (C3): 175°C, head: 175°C, dice: 175°C
· "PTFE-containing modifier A-3" : polytetrafluoroethylene-containing modifier (A-3) obtained in Production

### Example 3

· "PTFE powder 1" : polytetrafluoroethylene, manufactured by Asahi Glass Co. Ltd., trade name: Aflon PTFE CD-1

### (a) "Draw down in molding"

Draw down of parison in molding of was visually judged according to the following criterion.
○: Die swell is large, and no draw down is observed.
×: Die swell is small, and draw down is observed.

### (b) "Appearance of bottle"

The appearance of the resulted bottle was visually judged according to the following criterion.
○: Gloss is excellent, and surface roughening is not found.
×: Gloss is poor, and surface roughening is found.

### <Examples 74 to 106, Comparative Examples 78 to 92>

The components shown in Tables 19 to 22 were mixed at respective proportions, and the mixtures were subjected to extrusion molding by a 50 mm single screw extruder (manufactured by IKG K.K.) at a cylinder temperature set at 230°C, to obtain sheets made of thermoplastic resin compositions having a width of 80 mm and a thickness of 3 mm. Regarding the resulted sheets, the following items were evaluated. The results are shown in Tables 19 to 22.
· Surface appearance: The resulted sheet was visually observed and judged according to the following criterion.
   ○: Surface roughening, splinter, generation of fish eyes supposed to be caused by poor dispersion of PTFE, are not observed.
   ×: Surface roughening, splinter, generation of fish eyes supposed to be caused by poor dispersion of PTFE, are observed.
· Plate out: Pollution on the surface of a roll in molding was observed, using a two-roll mill.
   ○: No pollution on the surface of a roll
   △: Slight pollution on the surface of a roll
   ×: Heavy pollution on the surface of a roll

**Table 19**

| Example | 74 | 75 | 76 | 77 | 78 | 79 | 80 | 81 | 82 | 83 | 84 | 85 | 86 |
|---|---|---|---|---|---|---|---|---|---|---|---|---|---|
| PP resin 1 | 100 | 100 | 100 | 100 | | | | | | | | | |
| PP resin 2 | | | | | 100 | 100 | 100 | | | | | | |
| PE resin 1 | | | | | | | | 100 | 100 | 100 | | | |
| PE resin 2 | | | | | | | | | | | 100 | 100 | 100 |
| PTFE-containing modifier A-3 | 10 | 10 | 10 | 10 | 10 | 10 | 10 | 10 | 10 | 10 | 10 | 10 | 10 |
| (PTFE content in 100 parts of resin) | (5) | (5) | (5) | (5) | (5) | (5) | (5) | (5) | (5) | (5) | (5) | (5) | (5) |
| Talc | 200 | | | | 200 | | | 200 | | | 200 | | |
| Wood powder | | 200 | | | | 200 | | | 200 | | | 200 | |
| Kenaf ground product | | | 200 | | | | | | | | | | |
| Water paper | | | | 200 | | | 200 | | | 200 | | | 200 |
| Appearance of molded article | ○ | ○ | ○ | ○ | ○ | ○ | ○ | ○ | ○ | ○ | ○ | ○ | ○ |
| Plate out | ○ | ○ | ○ | ○ | ○ | ○ | ○ | ○ | ○ | ○ | ○ | ○ | ○ |

**Table 20**

| Comparative Example | 78 | 79 | 80 | 81 | 82 | 83 | 84 |
|---|---|---|---|---|---|---|---|
| PP resin 1 | 100 | 100 | 100 | 100 | | | |
| PP resin 2 | | | | | 100 | 100 | |
| PE resin 1 | | | | | | | |
| PE resin 2 | | | | | | | 100 |
| Thermoplastic resin modifier A-7 | | 5 | 5 | | | 5 | |
| PTFE powder-1 | | | 5 | 5 | 5 | | 5 |
| Talc | 200 | 200 | | | 200 | | |
| Wood powder | | | 200 | | | 200 | |
| Water paper | | | | 200 | | | 200 |
| Appearance of molded article | × | × | △ | × | × | × | × |
| Plate out | × | × | × | × | × | × | × |

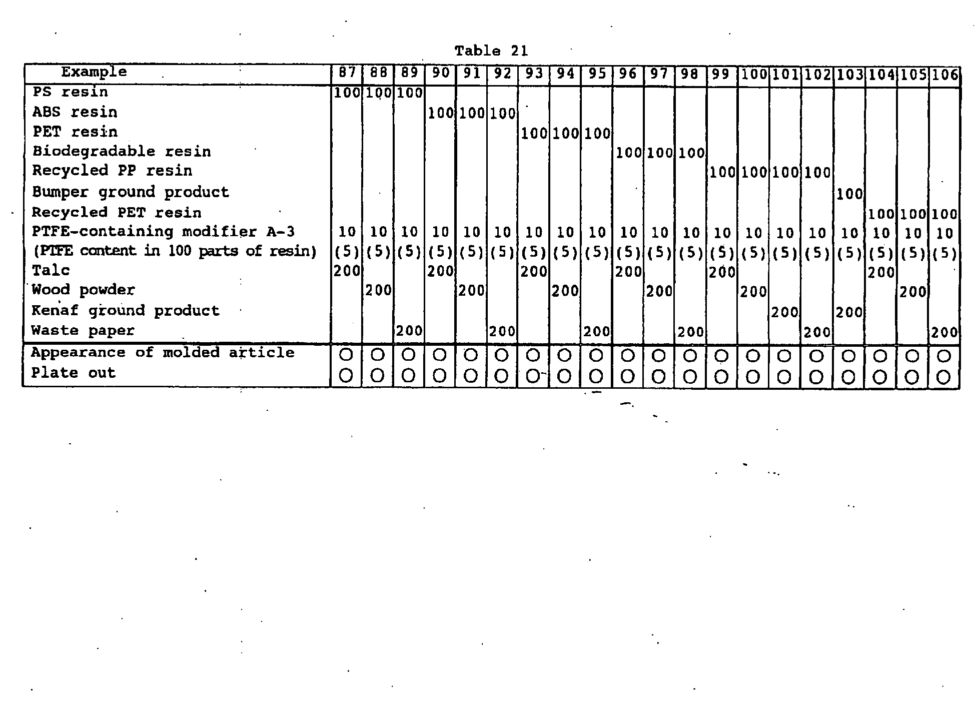

**Table 22**

| Comparative Example | 85 | 86 | 87 | 88 | 89 | 90 | 91 | 92 |
|---|---|---|---|---|---|---|---|---|
| PS resin | 100 | 100 | | | | | | |
| ABS resin | | | 100 | | | | | |
| PET resin | | | | 100 | | | | |
| Biodegradable resin | | | | | 100 | | | |
| Recycled PP resin | | | | | | 100 | | |
| Bumper ground product | | | | | | | 100 | |
| Recycled PET resin | | | | | | | | 100 |
| Thermoplastic resin modified A-7 | | 5 | 5 | | | | | 5 |
| PTFE powder-1 | | | 5 | 5 | 5 | 5 | 5 | |
| Talc | | | | 200 | | | | |
| Wood powder | 200 | 200 | 200 | | | 200 | | |
| Kenaf ground product | | | | | | | 200 | |
| Waste paper | | | | | 200 | | | 200 |
| Appearance of molded article | × | × | △ | × | × | × | × | × |
| Plate out | × | × | × | × | × | × | × | × |

As the composition components in Tables 19 to 22, the following components were specifically used.
· "PP resin 1" : polypropylene resin, manufactured by Nippon Polychem K.K., trade name: Novatec PP BC06C, molding temperature: 230°C
· "PP resin 2" : polypropylene resin, manufactured by Nippon Polychem K.K., trade name: Novatec PP FY-6C, molding temperature: 230°C
· "PE resin 1" : polyethylene resin, manufactured by Nippon Polychem K.K., trade name: Novatec HD HY540, molding temperature: 210°C
· "PE resin 2" : polyethylene resin, manufactured by Nippon Polychem K.K., trade name: Novatec LD LJ801N, molding temperature: 210°C
· "PS resin" : polystyrene resin, manufactured by Nippon Polystyrene K.K.; trade name: G440K, molding temperature: 230°C
· "ABS resin" : acrylonitrile/styrene copolymer reinforced by rubber, manufactured by Mitsubishi Rayon Co., Ltd., trade name: Diapet, molding temperature: 200°C
· "PET resin" : polyethylene terephthalate resin, manufactured by Mitsubishi Rayon Co., Ltd., trade name: Dianite PA-200, molding temperature: 250°C
· "Biodegradable resin" : polylactic acid-based resin, manufactured by Shimadzu Corp., trade name: Lacty 9400, molding temperature: 220°C
· "Recycled PP resin" : That obtained by two cycles of extrusion, shaping and grinding of PP resin 1 was used. Molding temperature: 230°C
· "Bumper ground product" : An automobile bumper essentially composed of a PP resin was ground into pellets. In the present invention, TSOP was used as a specific example. Molding temperature: 240°C
· "Recycled PET resin" : Materials other than PET were removed from fractioned and collected PET bottles used for beverage and the like, then, washed with a weak alkaline aqueous solution and water, then, wetground, then, resins other than the PET resin and, metal pieces were separated by utilizing specific gravity difference, to obtain ground products of PET bottles. Molding temperature: 250°C
· "PTFE-containing modifier A-3" : polytetrafluoroethyl· ene-containing modifier (A-3) obtained in Production Example 3
· "Thermoplastic resin modifier A-7" : A (meth)acrylate-based polymer (A-7) obtained in Production Example 7
· "PTFE powder 1" : polytetrafluoroethylene, manufactured by Asahi Glass Co. Ltd., trade name: Aflon PTFE CD-1

### <Examples 107 to 123, Comparative Examples 93 to 101>

The components shown in Tables 23 to 24 were mixed at respective proportions, and the mixtures were subjected to extrusion foaming molding by a 50 mm single screw extruder (manufactured by IKG K.K.), to obtain foamed sheets having a width of 80 mm and a thickness of 5 mm. Regarding the resulted foamed sheets, the following items were evaluated. The results are shown in Tables 23 to 24.
· Foamed cell condition in molded article: The section of a foamed sheet was observed and judged according to the following criterion.
   ○: Ratio of cell size near surface to cell size at center part is not over 2-fold.
   ×: Ratio of cell size near surface to cell size at center part is over 2-fold.
· Surface appearance of molded article: The surface of a foamed sheet was visually observed, and judged according to the following criterion.
   ○: No trace of foam breaking is found on the surface of a sheet, and the sheet is smooth.
   ×: Trace of foam breaking is found on the surface of a sheet, and the sheet reveals unevenness on the surface.

**Table 23**

| | 107 | 108 | 109 | 110 | 111 | 112 | 113 | 114 | 115 | 116 | 117 | 118 | 119 | 120 | 121 | 122 | 123 |
|---|---|---|---|---|---|---|---|---|---|---|---|---|---|---|---|---|---|
| PP resin | 100 | 100 | 100 | | | | | | | | | | | | | | |
| Recycled PP resin | | | | 100 | | | | | | | | | | | | | |
| PE resin 1 | | | | | 100 | 100 | 100 | | | | | | | | | | |
| PE resin 2 | | | | | | | | 100 | 100 | 100 | | | | | | | |
| PE resin 3 | | | | | | | | | | | 100 | 100 | 100 | | | | |
| PET resin | | | | | | | | | | | | | | 100 | | | |
| Recycled PET resin | | | | | | | | | | | | | | | 100 | | |
| PS resin | | | | | | | | | | | | | | | | 100 | |
| ABS resin | | | | | | | | | | | | | | | | | 100 |
| PTFE-containing modified A-4 | 10 | 10 | 10 | 10 | 10 | 10 | 10 | 10 | 10 | 10 | 10 | 10 | 10 | 10 | 10 | 10 | 10 |
| (PTFE content in 100 parts of resin) | (5) | (5) | (5) | (5) | (5) | (5) | (5) | (5) | (5) | (5) | (5) | (5) | (5) | (5) | (5) | (5) | (5) |
| ADCA | 5 | | | 5 | 5 | | | 5 | | | 5 | | | | | | |
| Butane | | 5 | | | | 5 | | | 5 | | | 5 | | | | | |
| Sodium bicarbonate | | | 2 | | | | 2 | | | 2 | | | 2 | 2 | 2 | 2 | 2 |
| Foamed body density | 0.12 | 0.11 | 0.31 | 0.12 | 0.11 | 0.11 | 0.31 | 0.1 | 0.11 | 0.35 | 0.11 | 0.11 | 0.41 | 0.43 | 0.33 | 0.33 | 0.37 |
| Foamed cell condition | ○ | ○ | ○ | ○ | ○ | ○ | ○ | ○ | ○ | ○ | ○ | ○ | ○ | ○ | ○ | ○ | ○ |
| Foamed body appearance | ○ | ○ | ○ | ○ | ○ | ○ | ○ | ○ | ○ | ○ | ○ | ○ | ○ | ○ | ○ | ○ | ○ |

**Table 24**

| Comparative Example | 93 | 94 | 95 | 96 | 97 | 98 | 99 | 100 | 101 | 102 |
|---|---|---|---|---|---|---|---|---|---|---|
| PP resin | 100 | 100 | | | | | | | | |
| Recycled PP resin | | | 100 | | | | | | | |
| PE resin 1 | | | | 100 | | | | | | |
| PE resin 2 | | | | | 100 | | | | | |
| PE resin 3 | | | | | | 100 | | | | |
| PET resin | | | | | | | 100 | | | |
| Recycled PET resin | | | | | | | | 100 | | |
| PS resin | | | | | | | | | 100 | |
| ABS resin | | | | | | | | | | 100 |
| Thermoplastic resin modifier A-7 | | | | 5 | 5 | | 5 | 5 | | |
| PTFE powder-1 | | 5 | 5 | 5 | | 5 | | | 5 | 5 |
| Sodium bicarbonate | 2 | 2 | 2 | 2 | 2 | 2 | 2 | 2 | 2 | 2 |
| Foamed body density | 0.60 | 0.62 | 0.64 | 0.49 | 0.45 | 0.46 | 0.61 | 0.62 | 0.52 | 0.48 |
| Foamed cell condition | × | × | × | Δ | × | × | × | × | × | × |
| Foamed body appearance | × | × | × | Δ | × | × | × | × | × | × |

As the composition components in Tables 23 to 24, the following components were specifically used.
· "PP resin" : polypropylene resin, manufactured by Nippon Polychem K.K., trade name: Novatec PP FY-6C, molding temperature: 230°C
· "PE resin 1" : polyethylene resin, manufactured by Nippon Polychem K.K., trade name: Novatec HD HJ580, molding temperature: 210°C
· "PE resin 2" : polyethylene resin, manufactured by Nippon Polychem K.K., trade name: Novatec LD LC720, molding temperature: 210°C
· "PE resin 3" : polyethylene resin, manufactured by Nippon Polychem K.K., trade name: Novatec LL UJ370, molding temperature: 210°C
· "PET resin" : polyethylene terephthalate resin, manufactured by Mitsubishi Rayon Co., Ltd., trade name: Dianite KR-560, molding temperature: 250°C
· "Recycled PP resin" : That obtained by two cycles of extrusion, shaping and grinding of PP resin 1 was used. Molding temperature: 230°C
· "Recycled PET resin" : materials other than PET were removed from fractioned and collected PET bottles used for beverage and the like, then, washed with a weak alkaline aqueous solution and water, then, wetground, then, resins other than the PET resin and, metal pieces were separated by utilizing specific gravity difference, to obtain ground products of PET bottles. Molding temperature: 250°C
· "PS resin" : polystyrene resin, manufactured by Nippon Polystyrene K.K.; trade name: G440K, molding temperature: 230°C
· "ABS resin" : acrylonitrile/styrene copolymer reinforced by rubber, manufactured by Mitsubishi Rayon Co., Ltd., trade name: Diapet 3001, molding temperature: 200°C
· "PTFE-containing modifier A-4" : polytetrafluoroethylene-containing modifier (A-4) obtained in Production Example 4
· "Thermoplastic resin modifier A-7" : A (meth)acrylate-based polymer (A-7) obtained in Production Example 7
· "PTFE powder 1" : polytetrafluoroethylene, manufactured by Asahi Glass Co. Ltd., trade name: Aflon PTFE CD-1

As described above, when the thermoplastic resin modifier of the present invention is used, the dispersibility of polytetrafluoroethylene is high in adding to the thermoplastic resin, and various physical properties such as flame retardancy, mechanical properties and the like are improved by addition in small amount, and the dispersibility of fillers is improved, further, a foamed body of excellent appearance having uniform foamed cells is obtained.

## Claims

1. A modifier for thermoplastic resin, comprising 40 to 70% by weight of polytetrafluoroethylene (A), and an alkyl (meth)acrylate-based polymer (B) containing an alkyl methacrylate carrying an alkyl group having 1 to 4 carbon atoms and an alkyl acrylate carrying an alkyl group having 1 to 4 carbon atoms and in which the total content of these constituent units is 70% by weight or more, where the amount of (A) is based on the total amount of (A) and (B).

2. The modifier for thermoplastic resin according to Claim 1 wherein the weight-average molecular weight of the alkyl (meth)acrylate-based polymer (B) is from 20,000 to 100,000.

3. The modifier for thermoplastic resin according to Claim 2 wherein the weight-average molecular weight of the alkyl (meth)acrylate-based polymer (B) is from 20,000 to 50,000.

4. The modifier for thermoplastic resin according to Claim 1 wherein the alkyl (meth)acrylate-based polymer (B) is a copolymer composed of 50 to 90% by weight of an alkyl methacrylate carrying an alkyl group having 1 to 4 carbon atoms and 10 to 50% by weight of an alkyl acrylate carrying an alkyl group having 1 to 4 carbon atoms.

5. The modifier for thermoplastic resin according to Claim 1, obtained by polymerizing monomers containing 70% by weight or more of an alkyl (meth)acrylate carrying an alkyl group having 1 to 4 carbon atoms in the dispersion wherein polytetrafluoroethylene (A) particles having an average particle size of 0.05 to 1.0 µm are dispersed, to form the alkyl (meth)acrylate-based polymer (B), then coagulating or spray-drying solid components in the resulted dispersion.

6. The modifier for thermoplastic resin according to Claim 1, obtained by polymerizing monomers containing 70% by weight or more of an alkyl (meth)acrylate carrying an alkyl group having 1 to 4 carbon atoms in the dispersion wherein polytetrafluoroethylene (A) particles are dispersed, to form the alkyl (meth)acrylate-based polymer (B) particles having an average particle size of 0.05 to 0.15 *µ*m, then coagulating or spray-drying solid components in the resulted dispersion.

7. The modifier for thermoplastic resin according to Claim 1, obtained by polymerizing monomers containing 70% by weight or more of an alkyl (meth)acrylate carrying an alkyl group having 1 to 4 carbon atoms in a dispersion wherein polytetrafluoroethylene (A) particles are dispersed, to form an alkyl (meth)acrylate-based polymer (B) having a weight-average molecular weight measured by gel permeation chromatography of 20,000 to 5,000,000, then coagulating or spray-drying solid components in the resulted dispersion.

8. The modifier for thermoplastic resin according to Claim 1, obtained by mixing a dispersion wherein the alkyl (meth)acrylate-based polymer (B) particles are dispersed, which was prepared by polymerizing monomers containing 70% by weight of more of an alkyl (meth)acrylate carrying an alkyl group having 1 to 4 carbon atoms, with a dispersion wherein the polytetrafluoroethylene (A) particles having an average particle size of 0.05 to 1.0 µm, and coagulating or spray-drying solid components in the mixed dispersion.

9. The modifier for thermoplastic resin according to Claim 1, obtained by mixing a dispersion wherein the alkyl (meth)acrylate-based polymer (B) particles having an average particle size of 0.05 to 0.15 µm, which was prepared by polymerizing monomers containing 70% by weight of more of an alkyl (meth)acrylate carrying an alkyl group having 1 to 4 carbon atoms, with a dispersion wherein the polytetrafluoroethylene (A) particles having an average particle size of 0.05 to 1.0 µm, and coagulating or spray-drying solid components in the mixed dispersion.

10. The modifier for thermoplastic resin according to Claim 1, obtained by mixing a dispersion wherein the alkyl (meth)acrylate-based polymer (B) particles having a weight-average molecular weight measured by gel permeation chromatography of 20,000 to 5,000,000, which was prepared by polymerizing monomers containing 70% by weight of more of an alkyl (meth)acrylate carrying an alkyl group having 1 to 4 carbon atoms, with a dispersion wherein the polytetrafluoroethylene (A) particles having an average particle size of 0.05 to 1.0 µm, and coagulating or spray-drying solid components in the mixed dispersion.

11. A thermoplastic resin composition obtained by adding the modifier according to Claim 1 to a thermoplastic resin (C) so that the content of the polytetrafluoroethylene (A) is 0.001 to 20 parts by weight based on 100 parts by weight of the thermoplastic resin (C)

12. A thermoplastic resin composition comprising the modifier according to Claim 1, a thermoplastic resin (C) and a flame retardant (D).

13. A thermoplastic resin composition comprising the modifier according to Claim 1, a thermoplastic resin (C) and a filler (E).

14. A molded article obtained by injection molding, extrusion molding or extrusion blow molding of the thermoplastic resin composition according to Claim 11.

15. A molded article obtained by injection foaming molding or extrusion forming molding of the thermoplastic resin composition according to Claim 11.

## Patentansprüche

1. Modifikator für ein thermoplastisches Harz, umfassend 40 bis 70 Gew.-% Polytetrafluorethylen (A) und ein Alkyl(meth)acrylat-basiertes Polymer (B), enthaltend ein Alkyl(meth)acrylat mit einer Alkylgruppe mit 1 bis 4 Kohlenstoffatomen und ein Alkylacrylat mit einer Alkylgruppe mit 1 bis 4 Kohlenstoffatomen und in welchem der Gesamtgehalt dieser Grundeinheiten 70 Gew.-% oder mehr beträgt, wobei die Menge an (A) bezogen auf die Gesamtmenge von (A) und (B) ist.

2. Modifikator für ein thermoplastisches Harz gemäß Anspruch 1, wobei das gewichtsmittlere Molekulargewicht des Alkyl(meth)acrylat-basierten Polymers (B) von 20.000 bis 100.000 beträgt.

3. Modifikator für ein thermoplastisches Harz gemäß Anspruch 2, wobei das gewichtsmittlere Molekulargewicht des Alkyl(meth)acrylat-basierten Polymers (B) von 20.000 bis 50.000 beträgt.

4. Modifikator für ein thermoplastisches Harz gemäß Anspruch 1, wobei das Alkyl(meth)acrylat-basierte Polymer (B) ein Copolymer darstellt, das aus 50 bis 90 Gew.-% eines Alkyl(meth)acrylats mit einer Alkylgruppe mit 1 bis 4 Kohlenstoffatomen und 10 bis 50 Gew.-% eines Alkylacrylats mit einer Alkylgruppe mit 1 bis 4 Kohlenstoffatomen zusammengesetzt ist.

5. Modifikator für ein thermoplastisches Harz gemäß Anspruch 1, erhalten durch Polymerisieren von Monomeren, die 70 Gew.-% oder mehr eines Alkyl(meth)acrylats mit einer Alkylgruppe mit 1 bis 4 Kohlenstoffatomen in der Dispersion enthalten, wobei Polytetrafluoroethylen-(A)-Partikel mit einer mittleren Partikelgröße von 0,05 bis 1,0 µm dispergiert sind, um das Alkyl(meth)acrylat-basierte Polymer (B) zu bilden, und anschließendes Koagulieren oder Sprühtrocknen der festen Bestandteile in der resultierenden Dispersion.

6. Modifikator für ein thermoplastisches Harz gemäß Anspruch 1, erhalten durch Polymerisieren von Monomeren, die 70 Gew.-% oder mehr eines Alkyl(meth)acrylats mit einer Alkylgruppe mit 1 bis 4 Kohlenstoffatomen in der Dispersion enthalten, wobei Polytetrafluorethylen-(A)-Partikel dispergiert sind, um die Alkyl(meth)acrylat-basierten Polymer-(B)-Partikel mit einer mittleren Partikelgröße von 0,05 bis 0,15 µm zu bilden, und anschließendes Koagulieren oder Sprühtrocknen der festen Bestandteile in der resultierenden Dispersion.

7. Modifikator für ein thermoplastisches Harz gemäß Anspruch 1, erhalten durch Polymerisieren von Monomeren, die 70 Gew.-% oder mehr eines Alkyl(meth)acrylats mit einer Alkylgruppe mit 1 bis 4 Kohlenstoffatomen in einer Dispersion enthalten, wobei Polytetrafluorethylen-(A)-Partikel dispergiert sind, um ein Alkyl(meth)acrylat-basiertes Polymer (B) zu bilden, das ein gewichtsmittleres Molekulargewicht, gemessen durch Gel-Permeationschromatographie, von 20.000 bis 5.000.000 aufweist, und anschließendes Koagulieren oder Sprühtrocknen der festen Bestandteile in der resultierenden Dispersion.

8. Modifikator für ein thermoplastisches Harz gemäß Anspruch 1, erhalten durch Mischen einer Dispersion, wobei die Alkyl(meth)acrylat-basierten Polymer-(B)-Partikel dispergiert sind, die durch Polymerisieren von Monomeren hergestellt wurde, die 70 Gew.-% oder mehr eines Alkyl(meth)acrylats mit einer Alkylgruppe mit 1 bis 4 Kohlenstoffatomen enthalten, mit einer Dispersion, wobei die Polytetrafluorethylen-(A)-Partikel eine mittlere Partikelgröße von 0,05 bis 1,0 µm aufweisen, und Koagulieren oder Sprühtrocknen der festen Bestandteile in der gemischten Dispersion.

9. Modifikator für ein thermoplastisches Harz gemäß Anspruch 1, erhalten durch Mischen einer Dispersion, wobei die Alkyl(meth)acrylat-basierten Polymer-(B)-Partikel eine mittlere Partikelgröße von 0,05 bis 0,15 µm aufweisen, die durch Polymerisieren von Monomeren hergestellt wurde, die 70 Gew.-% oder mehr eines Alkyl(meth)acrylats mit einer Alkylgruppe mit 1 bis 4 Kohlenstoffatomen enthalten, mit einer Dispersion, wobei die Polytetrafluorethylen-(A)-Partikel eine mittlere Partikelgröße von 0,05 bis 1,0 µm aufweisen, und Koagulieren oder Sprühtrocknen der festen Bestandteile in der gemischten Dispersion.

10. Modifikator für ein thermoplastisches Harz gemäß Anspruch 1, erhalten durch Mischen einer Dispersion, wobei die Alkyl(meth)acrylat-basierten Polymer-(B)-Partikel ein gewichtsmittleres Molekulargewicht, gemessen durch Gel-Permeationschromatographie, von 20.000 bis 5.000.000 aufweisen, die durch Polymerisieren von Monomeren hergestellt wurde, die 70 Gew.-% oder mehr eines Alkyl(meth)acrylats mit einer Alkylgruppe mit 1 bis 4 Kohlenstoffatomen enthalten, mit einer Dispersion, wobei die Polytetrafluorethylen-(A)-Partikel eine mittlere Partikelgröße von 0,05 bis 1,0 µm aufweisen, und Koagulieren oder Sprühtrocknen der festen Bestandteile in der gemischten Dispersion.

11. Thermoplastische Harzzusammensetzung, erhalten durch Zugabe des Modifikators gemäß Anspruch 1 zu einem thermoplastischen Harz (C), so dass der Gehalt des Polytetrafluorethylens (A) 0,001 bis 20 Gewichtsteile, bezogen auf 100 Gewichtsteile des thermoplastischen Harzes (C), beträgt.

12. Thermoplastische Harzzusammensetzung, umfassend den Modifikator gemäß Anspruch 1, ein thermoplastisches Harz (C) und ein Flammenschutzmittel (D).

13. Thermoplastische Harzzusammensetzung, umfassend den Modifikator gemäß Anspruch 1, ein thermoplastisches Harz (C) und einen Füllstoff (E).

14. Formkörper, erhalten durch Spritzgießen, Strangpressen oder Blasextrusion der thermoplastischen Harzzusammensetzung gemäß Anspruch 11.

15. Formkörper, erhalten durch Schaumspritzgießen oder Extrusionsformen der thermoplastischen Harzzusammensetzung gemäß Anspruch 11.

## Revendications

1. Modificateur de résine thermoplastique, comprenant 40 à 70 % en poids de polytétrafluoroéthylène (A) et un polymère (B) à base de (méth)acrylate d'alkyle contenant un méthacrylate d'alkyle portant un groupe alkyle contenant 1 à 4 atomes de carbone et un acrylate d'alkyle portant un groupe alkyle contenant 1 à 4 atomes de carbone et dans lequel la teneur totale de ces motifs constitutifs est de 70 % en poids ou plus, où la quantité de (A) est basée sur la quantité totale de (A) et (B).

2. Modificateur de résine thermoplastique selon la revendication 1, dans lequel le poids moléculaire moyen en poids du polymère (B) à base de (méth)acrylate d'alkyle est de 20 000 à 100 000.

3. Modificateur de résine thermoplastique selon la revendication 2, dans lequel le poids moléculaire moyen en poids du polymère (B) à base de (méth)acrylate d'alkyle est de 20 000 à 50 000.

4. Modificateur de résine thermoplastique selon la revendication 1, dans lequel le polymère (B) à base de (méth)acrylate d'alkyle est un copolymère composé de 50 à 90 % en poids d'un méthacrylate d'alkyle portant un groupe alkyle contenant 1 à 4 atomes de carbone et de 10 à 50 % en poids d'un acrylate d'alkyle portant un groupe alkyle contenant 1 à 4 atomes de carbone.

5. Modificateur de résine thermoplastique selon la revendication 1, obtenu par la polymérisation de monomères contenant 70 % en poids ou plus d'un (méth)acrylate d'alkyle portant un groupe alkyle contenant 1 à 4 atomes de carbone dans la dispersion dans laquelle des particules de polytétrafluoroéthylène (A) possédant une taille moyenne de particule de 0,05 à 1,0 µm sont dispersées, pour former le polymère (B) à base de (méth)acrylate d'alkyle, puis la coagulation ou le séchage par pulvérisation des composants solides dans la dispersion résultante.

6. Modificateur de résine thermoplastique selon la revendication 1, obtenu par la polymérisation de monomères contenant 70 % en poids ou plus d'un (méth)acrylate d'alkyle portant un groupe alkyle contenant 1 à 4 atomes de carbone dans la dispersion dans laquelle des particules de polytétrafluoroéthylène (A) sont dispersées, pour former les particules de polymère (B) à base de (méth)acrylate d'alkyle possédant une taille moyenne de particule de 0,05 à 0,15 µm, puis la coagulation ou le séchage par pulvérisation des composants solides dans la dispersion résultante.

7. Modificateur de résine thermoplastique selon la revendication 1, obtenu par la polymérisation de monomères contenant 70 % en poids ou plus d'un (méth)acrylate d'alkyle portant un groupe alkyle contenant 1 à 4 atomes de carbone dans une dispersion dans laquelle des particules de polytétrafluoroéthylène (A) sont dispersées, pour former un polymère (B) à base de (méth)acrylate d'alkyle possédant un poids moléculaire moyen en poids mesuré par chromatographie de perméation sur gel de 20 000 à 5 000 000, puis la coagulation ou le séchage par pulvérisation des composants solides dans la dispersion résultante.

8. Modificateur de résine thermoplastique selon la revendication 1, obtenu par le mélange d'une dispersion dans laquelle les particules de polymère (B) à base de (méth)acrylate d'alkyle sont dispersées, qui a été préparé par la polymérisation de monomères contenant 70 % en poids ou plus d'un (méth)acrylate d'alkyle portant un groupe alkyle contenant 1 à 4 atomes de carbone, avec une dispersion dans laquelle on trouve les particules de polytétrafluoroéthylène (A) possédant une taille moyenne de particule de 0,05 à 1,0 µm, et la coagulation ou le séchage par pulvérisation des composants solides dans la dispersion mélangée.

9. Modificateur de résine thermoplastique selon la revendication 1, obtenu par le mélange d'une dispersion dans laquelle les particules de polymère (B) à base de (méth)acrylate d'alkyle possédant une taille moyenne de particule de 0,05 à 0,15 µm, qui a été préparé par la polymérisation de monomères contenant 70 % en poids ou plus d'un (méth)acrylate d'alkyle portant un groupe alkyle contenant 1 à 4 atomes de carbone, avec une dispersion dans laquelle on trouve les particules de polytétrafluoroéthylène (A) possédant une taille moyenne de particule de 0,05 à 1,0 µm, et la coagulation ou le séchage par pulvérisation des composants solides dans la dispersion mélangée.

10. Modificateur de résine thermoplastique selon la revendication 1, obtenu par le mélange d'une dispersion dans laquelle on trouve les particules de polymère (B) à base de (méth)acrylate d'alkyle possédant un poids moléculaire moyen en poids mesuré par chromatographie de perméation sur gel de 20 000 à 5 000 000, qui a été préparé par la polymérisation de monomères contenant 70 % en poids ou plus d'un (méth)acrylate d'alkyle portant un groupe alkyle contenant 1 à 4 atomes de carbone, avec une dispersion dans laquelle on trouve les particules de polytétrafluoroéthylène (A) possédant une taille moyenne de particule de 0,05 à 1,0 µm, et la coagulation ou le séchage par pulvérisation des composants solides dans la dispersion mélangée.

11. Composition de résine thermoplastique obtenue par l'ajout du modificateur selon la revendication 1 à une résine thermoplastique (C) de manière à ce que la teneur en polytétrafluoroéthylène (A) soit de 0,001 à 20 parties en poids sur la base de 100 parties en poids de la résine thermoplastique (C).

12. Composition de résine thermoplastique comprenant le modificateur selon la revendication 1, une résine thermoplastique (C) et un agent ignifugeant (D).

13. Composition de résine thermoplastique comprenant le modificateur selon la revendication 1, une résine thermoplastique (C) et une charge (E).

14. Article moulé obtenu par moulage par injection, moulage par extrusion ou moulage par extrusion-soufflage de la composition de résine thermoplastique selon la revendication 11.

15. Article moulé obtenu par moulage de mousse par injection ou moulage par formage par extrusion de la composition de résine thermoplastique selon la revendication 11.
